# EUROPEAN PATENT SPECIFICATION

(11) **EP 4 523 929 B1**
(45) Date of publication and mention of the grant of the patent: **18.11.2026**
(21) Application number: 24194639.1
(22) Date of filing: 14.08.2024
(51) Int. Cl.: B60C 23/04, B60C 19/00, B60C 15/06, B60C 15/00

(54) **HEAVY DUTY TIRE**
SCHWERLASTREIFEN
PNEU POUR POIDS LOURDS

(30) Priority: 14.09.2023 JP 2023148894
(43) Date of publication of application: 19.03.2025
(73) Proprietor: Sumitomo Rubber Industries, Ltd., Kobe-shi, Hyogo 651-0072 (JP)
(72) Inventor: ITO, Tadashi, Kobe-shi, Hyogo, 651-0072 (JP); YOSHINO, Masayuki, Kobe-shi, Hyogo, 651-0072 (JP)
(74) Representative: Manitz Finsterwald Patent- und Rechtsanwaltspartnerschaft mbB

(56) References cited:
- EP-A1- 3 991 993
- DE-A1- 102019 209 779
- US-B2- 11 059 959
- US-B2- 9 975 385

## Description

### CROSS REFERENCE TO RELATED APPLICATION

This application claims priority on Japanese Patent Application No. 2023-148894 filed in Japan on September 14, 2023.

### TECHNICAL FIELD

The present invention relates to heavy duty tires.

### BACKGROUND ART

In order to manage data regarding manufacturing management, customer information, running history, etc., of tires, incorporation of radio frequency identification (RFID) tags into tires has been proposed. Various studies have been conducted for the technology to incorporate an RFID tag into a tire (for example JP 2021-046057 A).

### CITATION LIST

### [PATENT LITERATURE]

US 11,059,959 B2 discloses a tire according to the preamble of claim 1. Other related tires are disclosed in DE 10 2019 209 779 A1 and EP 3 991 993 A1.

### SUMMARY OF THE INVENTION

### [TECHNICAL PROBLEM]

In a tire, deformation and restoration are repeated. In the tire in a running state, movement is active at each end portion of a tread and near a maximum width position. From the viewpoint of preventing damage to an RFID tag itself, the RFID tag is placed at a portion at which there is little movement. In the case of a heavy duty tire, each bead portion has high stiffness, and thus it has been considered to place an RFID tag in the bead portion.

For the tire, the RFID tag is foreign matter. Therefore, even if the position of the RFID tag is determined from the viewpoint of preventing damage to the RFID tag itself and forming a good communication environment, strain is increased due to the presence of the RFID tag, and there is an undeniable risk of occurrence of damage to the RFID tag.

A heavy duty tire is not always used under conditions where a load close to a normal load is applied to the tire. The heavy duty tire is sometimes used under conditions where a load (light load) that is about 50% of the normal load is applied to the tire. If the location where the RFID tag is placed is sensitive to the action of a load, strain is increased even under a light load.

The heavy duty tire is used in a wide load range from a light load to a heavy load. In order to prevent the presence of the RFID tag from decreasing the durability of the tire, it is important to check whether or not strain is increased due to the placement of the RFID tag even under a light load.

The present invention has been made in view of such circumstances. An object of the present invention is to provide a heavy duty tire that can suppress occurrence of damage due to the presence of an RFID tag.

### [SOLUTION TO PROBLEM]

A heavy duty tire according to the present invention includes the features of claim 1.

### [ADVANTAGEOUS EFFECTS OF THE INVENTION]

According to the present invention, a heavy duty tire that can suppress occurrence of damage due to the presence of an RFID tag is obtained.

### BRIEF DESCRIPTION OF DRAWINGS

FIG. 1 is a cross-sectional view showing a part of a heavy duty tire according to an embodiment of the present invention.
FIG. 2 is a cross-sectional view showing a part of the tire in FIG. 1.
FIG. 3 is a cross-sectional view showing a modification of a cord reinforcing layer.
FIG. 4 is a plan view of a tag member.
FIG. 5 is a cross-sectional view taken along a line V-V in FIG. 4.
FIG. 6 is a cross-sectional view showing a part of the tire in a ground-contact state.
FIG. 7 is a cross-sectional view showing a part of the tire in the ground-contact state.
FIG. 8 is a cross-sectional view showing a contour of a carcass.
FIG. 9 is a cross-sectional view illustrating specification of the contour of the carcass.
FIG. 10 is a cross-sectional view illustrating specification of a contour of another carcass.

### DETAILED DESCRIPTION

The following will describe in detail the present invention based on preferred embodiments with appropriate reference to the drawings.

A tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a normal rim, the internal pressure of the tire is adjusted to a normal internal pressure, and no load is applied to the tire is referred to as a normal state.

In the present invention, unless otherwise specified, the dimensions and angles of each component of the tire are measured in the normal state.

The dimensions and angles of each component in a meridian cross-section of the tire, which cannot be measured in a state where the tire is fitted on the normal rim, are measured in a cross-section of the tire obtained by cutting the tire along a plane including the rotation axis of the tire. In this measurement, the tire is set such that the distance between right and left beads is made equal to the distance between the beads in the tire that is fitted on the normal rim.

The normal rim means a rim specified in a standard on which the tire is based. The "standard rim" in the JATMA standard, the "Design Rim" in the TRA standard, and the "Measuring Rim" in the ETRTO standard are normal rims.

The normal internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are normal internal pressures.

A normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

In the present invention, a complex elastic modulus of a component formed from a crosslinked rubber, from among the components included in the tire, is measured according to the standards of JIS K6394. The measurement conditions are as follows.
Initial strain = 10%
Dynamic strain = ±1%
Frequency = 10 Hz
Mode = stretch mode
Temperature = 70°C

In this measurement, a test piece (a length of 40 mm × a width of 4 mm × a thickness of 1 mm) is sampled from the tire. The length direction of the test piece is caused to coincide with the circumferential direction of the tire. When a test piece cannot be sampled from the tire, a test piece is sampled from a sheet-shaped crosslinked rubber (hereinafter, also referred to as a rubber sheet) obtained by pressurizing and heating a rubber composition, which is used for forming the component to be measured, at a temperature of 170°C for 12 minutes.

In the present invention, the complex elastic modulus is represented as a complex elastic modulus at 70°C.

### [Outline of embodiments of the present invention]

The present invention is directed to a heavy duty tire including: a pair of beads; a carcass extending on and between the pair of beads; a belt located radially outward of the carcass and including a large number of belt cords aligned with each other; a pair of sidewalls each located axially outward of the carcass; a pair of chafers each located radially inward of the sidewall and configured to come into contact with a rim; and a tag member including an RFID tag, wherein each of the beads includes a core and an apex located radially outward of the core, the carcass includes a carcass ply, the carcass ply includes a ply body extending between the pair of beads and a pair of turned-up portions each connected to the ply body and turned up around the bead, the belt includes three or fewer belt plies aligned in a radial direction, the rim is a normal rim, a state where the tire is fitted on the rim and an internal pressure of the tire is adjusted to a normal internal pressure is a normal state, a state where a load equal to 50% of a normal load is applied to the tire in the normal state and the tire is brought into contact with a flat surface is a standard ground-contact state, and in the standard ground-contact state, the RFID tag is located between an axially outer end of the rim and a maximum width position of the tire in an axial direction, and is located between a radially outer end of the rim and the maximum width position of the tire in the radial direction.

In the tire, the RFID tag is placed away from the vicinity of an end portion of a flange of the rim and the vicinity of the maximum width position of the tire where large strain may be generated if the RFID tag is present. In the tire, the presence of the RFID tag is inhibited from promoting an increase in strain. Therefore, in the tire, occurrence of damage due to the presence of the RFID tag is suppressed. Moreover, occurrence of damage to the RFID tag itself is also suppressed.

In the tire, good durability is maintained even though the RFID tag is incorporated into the tire.

Preferably, in the standard ground-contact state, the RFID tag is located between an end of the turned-up portion and a maximum width position of the carcass in the axial direction, and is located between the end of the turned-up portion and the maximum width position of the carcass in the radial direction.

In the tire, the RFID tag is placed sufficiently away from the vicinity of the end portion of the flange and the vicinity of the maximum width position where large strain may be generated if the RFID tag is present. In the tire, the presence of the RFID tag is effectively inhibited from promoting an increase in strain. In the tire, occurrence of damage due to the presence of the RFID tag is effectively suppressed. Moreover, occurrence of damage to the RFID tag itself is also effectively suppressed. In the tire, good durability is maintained even though the RFID tag is incorporated into the tire.

Preferably, a shortest distance from an outer surface of the tire to the RFID tag is not less than 3.5 mm.

In the tire, the RFID tag is covered with a rubber having a sufficient thickness. In the tire, the presence of the RFID tag is effectively inhibited from promoting an increase in strain. In the tire, occurrence of damage due to the presence of the RFID tag is effectively suppressed.

Preferably, in a meridian cross-section of the tire in the normal state, a contour of the carcass includes, in a radially inner portion from the maximum width position of the carcass, an outwardly bulging curved portion and an inwardly recessed inversely curved portion located radially inward of the curved portion; the inversely curved portion is connected to the curved portion; a boundary between the curved portion and the inversely curved portion is an inflection point; a part or an entirety of the curved portion is represented by a first arc including the inflection point; a part or an entirety of the inversely curved portion is represented by a second arc including the inflection point; the first arc and the second arc are tangent to each other at the inflection point; and the RFID tag is located radially outward of the inflection point.

In the tire, the presence of the RFID tag is effectively inhibited from promoting an increase in strain. In the tire, occurrence of damage due to the presence of the RFID tag is effectively suppressed. Moreover, occurrence of damage to the RFID tag itself is also effectively suppressed. In the tire, good durability is maintained even though the RFID tag is incorporated into the tire.

Preferably, the apex includes an inner apex located radially outward of the core and an outer apex located radially outward of the inner apex, the outer apex is more flexible than the inner apex, the tag member is in contact with the outer apex on a radially outer side of the end of the turned-up portion, and the RFID tag is located between an outer end of the outer apex and the end of the turned-up portion in the radial direction.

In the tire, since the flexible outer apex is located axially inward of the RFID tag, the presence of the RFID tag is effectively inhibited from promoting an increase in strain. In the tire, occurrence of damage due to the presence of the RFID tag is suppressed. Moreover, occurrence of damage to the RFID tag itself is also suppressed. In the tire, good durability is maintained even though the RFID tag is incorporated into the tire. Furthermore, since the outer apex is located between the carcass ply and the RFID tag, the RFID tag is placed so as to be spaced apart from the carcass ply. Even if the carcass ply includes steel cords as carcass cords, radio waves are less likely to be disturbed, so that a good communication environment is formed between the RFID tag and a communication device (not shown). Writing of data to the RFID tag and reading of data recorded in the RFID tag are accurately performed.

Preferably, between the outer end of the outer apex and an outer end of the chafer, the tag member is located between the outer apex and the sidewall.

The tire can achieve improvement of the readability of the RFID tag and reduction of the risk of damage to the RFID tag while suppressing influence on durability.

Preferably, an outer end of the chafer is located radially outward of an inner end of the sidewall, and the sidewall covers the outer end of the chafer.

In the tire, strain applied to the outer end of the chafer is effectively alleviated. In the tire, occurrence of damage due to the presence of the RFID tag is suppressed. Moreover, occurrence of damage to the RFID tag itself is also suppressed. In the tire, good durability is maintained even though the RFID tag is incorporated into the tire.

Preferably, the tag member is a plate-shaped member in which the RFID tag is covered with a crosslinked rubber, and the tag member has a thickness of not less than 1.0 mm and not greater than 2.5 mm.

In the tire, the risk of damage to the RFID tag is reduced, and a good communication environment is formed.

Preferably, a number of the belt plies included in the belt is two or less.

The belt can contribute to reducing the weight of the tire.

Preferably, the above-described tire further includes a band located radially outward of the carcass and including a helically wound band cord, the band includes a full band having ends opposed to each other across an equator plane, and the belt plies and the full band are aligned in the radial direction.

The band restricts the movement of a tread portion, so that deformation of the entire tire is suppressed.

### [Details of embodiments of the present invention]

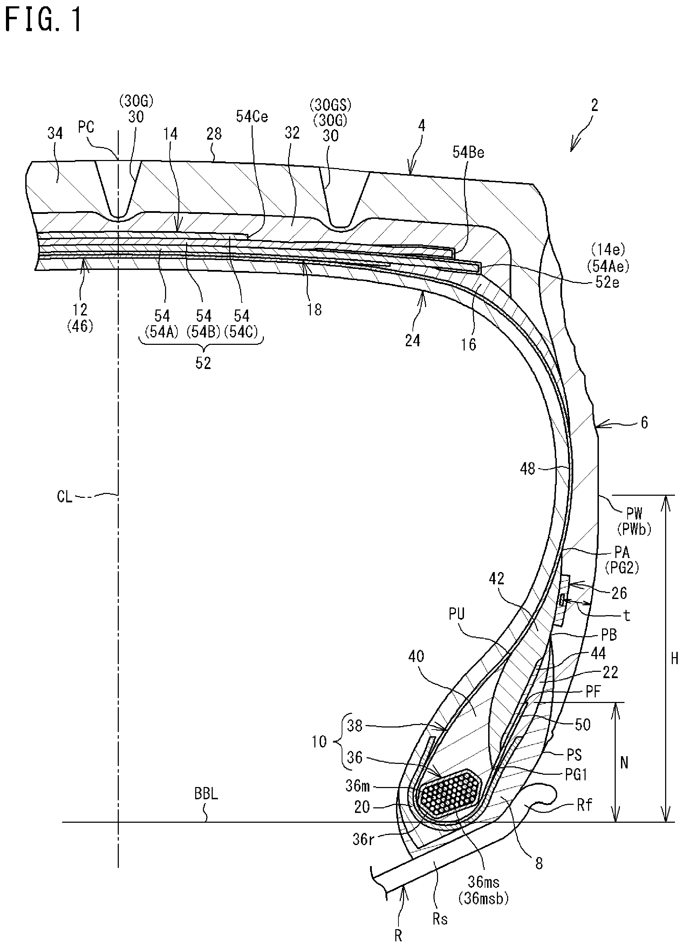

FIG. 1 shows a part of a heavy duty tire 2 (hereinafter, also referred to simply as "tire 2") according to an embodiment of the present invention. The tire 2 is mounted to a vehicle such as a truck and a bus.

In FIG. 1, the tire 2 is fitted on a rim R (normal rim).

FIG. 1 shows a part of a tire-rim assembly. The tire-rim assembly includes the rim R and the tire 2 fitted on the rim R.

FIG. 1 shows a part of a cross-section (hereinafter, meridian cross-section) of the tire 2 along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2.

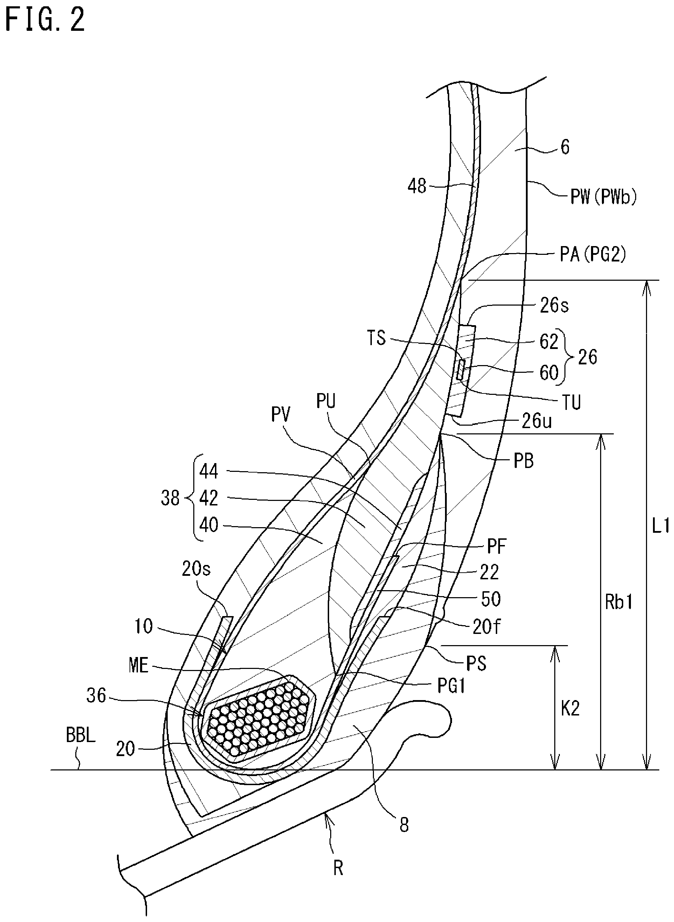

FIG. 2 shows a part of the cross-section shown in FIG. 1. FIG. 2 shows a bead portion of the tire 2.

In FIG. 1, an alternate long and short dash line CL extending in the radial direction represents the equator plane of the tire 2. In FIG. 1 and FIG. 2, a solid line BBL extending in the axial direction is a bead base line. The bead base line BBL is a line that defines the rim diameter (see JATMA or the like) of the rim R.

The tire 2 includes a tread 4, a pair of sidewalls 6, a pair of chafers 8, a pair of beads 10, a carcass 12, a cord reinforcing layer 14, a pair of cushion layers 16, a strip layer 18, a pair of steel reinforcing layers 20, a pair of interlayer strips 22, an inner liner 24, and a tag member 26.

The tread 4 is located radially outward of the carcass 12. The tread 4 comes into contact with a road surface at a tread surface 28 thereof. Grooves 30 are formed on the tread 4.

The tread 4 includes a plurality of circumferential grooves 30G that continuously extend in the circumferential direction. The two outermost circumferential grooves 30GS in axial direction among the plurality of circumferential grooves 30G are shoulder circumferential grooves.

The tread 4 includes a base portion 32 and a cap portion 34 located radially outward of the base portion 32. The base portion 32 is formed from a crosslinked rubber that has low heat generation properties. The cap portion 34 is formed from a crosslinked rubber for which wear resistance and grip performance are taken into consideration. The cap portion 34 includes the tread surface 28.

In FIG. 1, a position indicated by reference sign PC corresponds to an equator. The equator PC is the point of intersection of the tread surface 28 and the equator plane CL. In the case where the groove 30 is located on the equator plane CL as in the tire 2, the equator PC is specified on the basis of a virtual tread surface obtained on the assumption that the groove 30 is not present thereon.

The distance in the radial direction, from the bead base line BBL to the equator PC, obtained in the tire 2 in the normal state is the cross-sectional height (see JATMA or the like) of the tire 2.

Each sidewall 6 is connected to an end of the tread 4. The sidewall 6 is located radially inward of the tread 4. The sidewall 6 is located axially outward of the carcass 12. A position indicated by reference sign PS is an inner end of the sidewall 6.

The sidewall 6 is formed from a crosslinked rubber for which cut resistance is taken into consideration. The complex elastic modulus of the sidewall 6 is not less than 2.0 MPa and not greater than 6.0 MPa.

A position indicated by reference sign PW is an axially outer end (hereinafter, outer end PW) of the tire 2. In the case where decorations such as patterns and letters are present on the outer surface of the tire 2, the outer end PW is specified on the basis of a virtual outer surface obtained on the assumption that the decorations are not present thereon. The tire 2 has a maximum width at the outer end PW. The outer end PW is also referred to as maximum width position.

In the present invention, the maximum width position PW in the tire 2 in the normal state is a reference maximum width position PWb. The distance in the axial direction from a first reference maximum width position PWb to a second reference maximum width position PWb (not shown) is the cross-sectional width (see JATMA or the like) of the tire 2.

In FIG. 1, a length indicated by a double-headed arrow H is the distance in the radial direction from the bead base line BBL to the reference maximum width position PWb. The distance H in the radial direction is also referred to as radial height of the reference maximum width position PWb.

In the tire 2 in the normal state, the ratio of the radial height H of the reference maximum width position PWb to the cross-sectional height is not less than 0.40 and not greater than 0.60.

Each chafer 8 is located radially inward of the sidewall 6. The chafer 8 comes into contact with the rim R. A position indicated by reference sign PB is an outer end of the chafer 8.

The chafer 8 is formed from a crosslinked rubber for which wear resistance is taken into consideration. The complex elastic modulus of the chafer 8 is not less than 10 MPa and not greater than 15 MPa. The chafer 8 is harder than the sidewall 6.

Each bead 10 is located axially inward of the chafer 8. The bead 10 is located radially inward of the sidewall 6. The bead 10 includes a core 36 and an apex 38.

The core 36 extends in the circumferential direction. The core 36 includes a core body 36m and a wrapping layer 36r.

The core body 36m is a ring extending in the circumferential direction. The core body 36m includes a wire made of steel and wound in the circumferential direction. A cross-sectional shape of the core body 36m is shaped by winding the wire in a regular manner. Accordingly, in a cross-section of the core body 36m, cross-sectional units each including a plurality of wire cross-sections aligned substantially in the axial direction are stacked in a plurality of stages substantially in the radial direction. The cross-sectional shape of the core body 36m is represented by a line that circumscribes the core body 36m. As shown in FIG. 1, the core body 36m has a hexagonal cross-sectional shape. The core body 36m may have a quadrangular cross-sectional shape.

The core body 36m generally has six side surfaces 36ms. As shown in FIG. 1, one side surface 36msb out of the six side surfaces 36ms is located so as to face a seat Rs of the rim R. In the present invention, the side surface 36msb which is located so as to face the seat Rs of the rim R is a bottom surface of the core body 36m. The core body 36m has the bottom surface 36msb which is located so as to face the seat Rs of the rim R. In the meridian cross-section of the tire 2, the contour of the bottom surface 36msb is represented by a straight line.

The wrapping layer 36r surrounds the core body 36m. The wrapping layer 36r covers the core body 36m. The wrapping layer 36r prevents the core body 36m from falling apart.

The configuration of the wrapping layer 36r is not particularly limited as long as the wrapping layer 36r can prevent the core body 36m from falling apart. The wrapping layer 36r is composed of a cord helically wound around the core body 36m, a rubberized fabric wrapped around the core body 36m, or the like.

The apex 38 is located radially outward of the core 36. The apex 38 extends radially outward from the core 36. The apex 38 is tapered outward. An outer end PA of the apex 38 is located radially outward of the outer end PB of the chafer 8.

The apex 38 includes an inner apex 40 and an outer apex 42. The inner apex 40 is located radially outward of the core 36. The outer apex 42 is located radially outward of the inner apex 40.

The inner apex 40 is tapered outward. The inner apex 40 is formed from a hard crosslinked rubber. The complex elastic modulus of the inner apex 40 is not less than 60 MPa and not greater than 90 MPa. The inner apex 40 is harder than the chafer 8.

The outer apex 42 is thick around an outer end PU of the inner apex 40. The outer apex 42 is tapered inward and tapered outward from the thick portion thereof.

An inner end PG1 of the outer apex 42 is located near the core 36. An outer end PG2 of the outer apex 42 is also the outer end PA of the apex 38.

In FIG. 2, a length indicated by a double-headed arrow L1 is the distance in the radial direction from the bead base line BBL to the outer end PG2 of the outer apex 42. The distance L1 in the radial direction is also referred to as radial height of the outer end PG2 of the outer apex 42. The outer end PG2 of the outer apex 42 is also the outer end PA of the apex 38. The distance L1 in the radial direction is also referred to as radial height of the bead 10.

In the tire 2, from the viewpoint of well balancing the stiffness of the bead portion and bending of the tire 2, the outer end PA of the apex 38 is located radially inward of the reference maximum width position PWb. Specifically, the ratio (L1/H) of the radial height L1 of the bead 10 to the radial height H of the reference maximum width position PWb is adjusted in the range of not less than 0.55 and not greater than 0.95.

The outer apex 42 is formed from a crosslinked rubber. The outer apex 42 is more flexible than the inner apex 40. The complex elastic modulus of the outer apex 42 is not less than 3.0 MPa and not greater than 6.0 MPa. The outer apex 42 is more flexible than the chafer 8. The outer apex 42 is substantially equal to sidewall 6 in stiffness, or is harder than the sidewall 6.

The apex 38 of the tire 2 further includes an edge strip 44.

The edge strip 44 is located axially outward of the outer apex 42 and forms a part of the outer surface of the apex 38. The edge strip 44 is located between the outer end PB of the chafer 8 and the inner end PG1 of the outer apex 42 in the radial direction. An outer end of the edge strip 44 is located radially inward of an outer end of the interlayer strip 22. The edge strip 44 is located between the outer end of the interlayer strip 22 and the inner end PG1 of the outer apex 42 in the radial direction.

The edge strip 44 is formed from a crosslinked rubber. The edge strip 44 is more flexible than the chafer 8 and is harder than the outer apex 42. The complex elastic modulus of the edge strip 44 is not less than 7.0 MPa and not greater than 12 MPa.

The carcass 12 is located inward of the tread 4, the pair of sidewalls 6, and the pair of chafers 8. The carcass 12 extends on and between the pair of beads 10. The carcass 12 of the tire 2 has a radial structure.

The carcass 12 includes at least one carcass ply 46. The carcass 12 of the tire 2 is composed of one carcass ply 46. The carcass ply 46 is turned up around each bead 10.

The carcass ply 46 has a ply body 48 and a pair of turned-up portions 50. The ply body 48 extends between the pair of beads 10, that is, between a first bead 10 and a second bead 10 (not shown). Each turned-up portion 50 is connected to the ply body 48 and turned up around the bead 10. The turned-up portion 50 of the tire 2 is turned up around the bead 10 from the inner side toward the outer side in the axial direction. An end PF of the turned-up portion 50 is located radially inward of the outer end PB of the chafer 8. The end PF of the turned-up portion 50 is located radially inward of the outer end PU of the inner apex 40. The end PF of the turned-up portion 50 is located between the outer end and an inner end of the edge strip 44 in the radial direction, and is in contact with the edge strip 44. The bead 10 is interposed between the ply body 48 and the turned-up portion 50.

The carcass ply 46 includes a large number of carcass cords aligned with each other, which are not shown. These carcass cords are covered with a topping rubber. Each carcass cord intersects the equator plane CL. An angle of each carcass cord with respect to the equator plane CL (hereinafter referred to as intersection angle of the carcass cord) is not less than 70° and not greater than 90°. The material of the carcass cords is steel. The carcass cords are steel cords.

In FIG. 1, a length indicated by a double-headed arrow N is the distance in the radial direction from the bead base line BBL to the end PF of the turned-up portion 50. The distance N in the radial direction is also referred to as radial height of the end PF of the turned-up portion 50.

In the tire 2, the ratio (N/H) of the radial height N of the end PF of the turned-up portion 50 to the radial height H of the reference maximum width position PWb is not less than 0.25 and not greater than 0.45.

The cord reinforcing layer 14 is located radially outward of the carcass 12. The cord reinforcing layer 14 is located radially inward of the tread 4.

The cord reinforcing layer 14 of the tire 2 includes a belt 52. The belt 52 includes three or fewer belt plies 54. The belt 52 is lighter than a belt including four belt plies 54. The belt 52 can contribute to reducing the weight of the tire 2.

The belt 52 shown in FIG. 1 includes three belt plies 54. The three belt plies 54 are a first belt ply 54A, a second belt ply 54B, and a third belt ply 54C. These belt plies 54 are aligned in the radial direction. As shown in FIG. 1, the first belt ply 54A located on the innermost side in the radial direction has a widest width, and the third belt ply 54C located on the outermost side in the radial direction has a narrowest width. Each end 54Ae of the first belt ply 54A is located axially outward of an end 54Be of the second belt ply 54B. Each end 54Ce of the third belt ply 54C is located axially inward of the end 54Be of the second belt ply 54B. Each end 54Ae of the first belt ply 54A is the end 52e of the belt 52.

In the tire 2, the number of belt plies 54 included in the belt 52 may be two or less. When the belt 52 includes two or fewer belt plies 54 aligned in the radial direction, the belt 52 can effectively contribute to reducing the weight of the tire 2. In the case where the belt 52 is composed of two belt plies 54, the belt 52 is composed of a wider first belt ply 54A and a second belt ply 54B which is the widest after the first belt ply 54A.

Each belt ply 54 included in the belt 52 includes a large number of belt cords aligned with each other, which are not shown. Each belt cord is inclined with respect to the equator plane CL.

In the tire 2, the direction of inclination of the belt cords included in the second belt ply 54B, that is, second belt cords, is opposite to the direction of inclination of the belt cords included in the first belt ply 54A, that is, first belt cords. The direction of inclination of the belt cords included in the third belt ply 54C, that is, third belt cords, is the same as the direction of inclination of the second belt cords. The direction of inclination of the third belt cords may be opposite to the direction of inclination of the second belt cords.

An angle of the first belt cords with respect to the equator plane CL, that is, an inclination angle of the first belt cords, is preferably not less than 15° and preferably not greater than 30°. The inclination angle of the first belt cords is more preferably not greater than 20°. An angle of the second belt cords with respect to the equator plane CL, that is, an inclination angle of the second belt cords, is preferably not less than 15° and preferably not greater than 30°. The inclination angle of the second belt cords is more preferably not greater than 20°. An angle of the third belt cords with respect to the equator plane CL, that is, an inclination angle of the third belt cords, is preferably not less than 15° and preferably not greater than 50°. The inclination angle of the third belt cords is more preferably not greater than 25°.

The material of the belt cords is steel. The belt cords are steel cords.

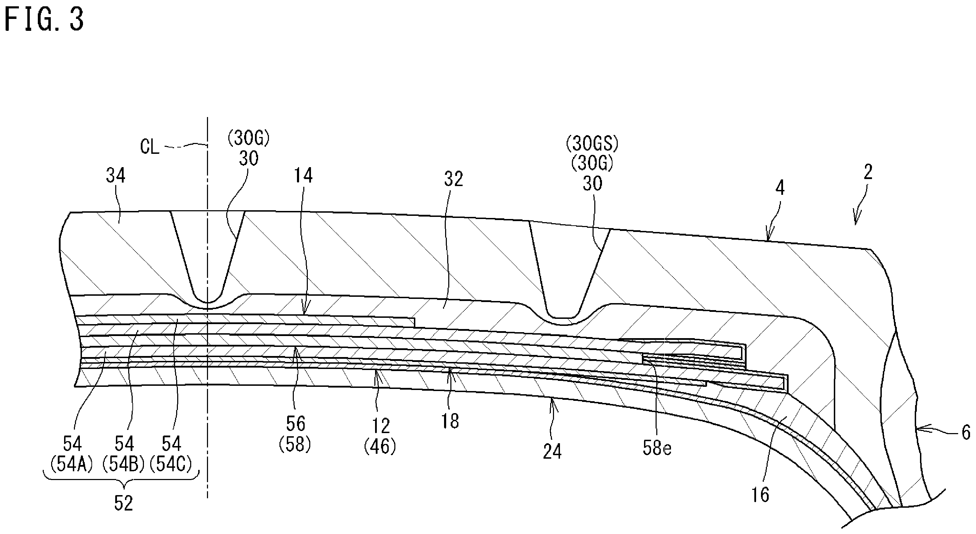

FIG. 3 shows a modification of the cord reinforcing layer 14. The cord reinforcing layer 14 includes a band 56 in addition to the above-described belt 52. The band 56 restricts the movement of a tread portion, so that deformation of the entire tire 2 is suppressed.

The band 56 includes a helically wound band cord, which is not shown. The band cord is a steel cord. The band cord may be a cord formed from an organic fiber (hereinafter referred to as organic fiber cord). In the case where the band cord is an organic fiber cord, examples of the organic fiber include nylon fibers, polyester fibers, rayon fibers, and aramid fibers.

The band 56 of the tire 2 includes a full band 58. As shown in FIG. 3, the full band 58 is placed such that both ends thereof are opposed to each other across the equator plane CL. The band 56 may include a pair of edge bands placed so as to be spaced apart from each other in the axial direction, which are not shown.

As described above, the belt 52 of the tire 2 includes the three belt plies 54. The three belt plies 54 and the full band 58 are aligned in the radial direction. In the cord reinforcing layer 14 shown in FIG. 3, the full band 58 is located between the first belt ply 54A and the second belt ply 54B. The full band 58 may be placed between the second belt ply 54B and the third belt ply 54C. The full band 58 may be placed radially inward of the first belt ply 54A. The full band 58 may be placed radially outward of the third belt ply 54C.

Each end 58e of the full band 58 is located axially inward of the end 52e of the belt 52. In the cord reinforcing layer 14 shown in FIG. 3, each end 58e of the full band 58 is located axially inward of the end 54Ae of the first belt ply 54A, and is located axially inward of the end 54Be of the second belt ply 54B. Each end 58e of the full band 58 is located axially outward of the end 54Ce of the third belt ply 54C. Each end 52e of the belt 52 is the end 14e of the cord reinforcing layer 14.

In the cord reinforcing layer 14 shown in FIG. 3 as well, from the viewpoint of weight reduction, the number of belt plies 54 included in the belt 52 may be two or less. In the case where the belt 52 is composed of two belt plies 54, the belt 52 is composed of a wider first belt ply 54A and a second belt ply 54B which is the widest after the first belt ply 54A.

Each cushion layer 16 is located between the cord reinforcing layer 14 and the carcass 12 at the end of the cord reinforcing layer 14. The cushion layer 16 is formed from a flexible crosslinked rubber.

The strip layer 18 is located between the carcass 12 and the cord reinforcing layer 14 on the radially inner side of the tread 4. The strip layer 18 is stacked on the carcass 12, and the cord reinforcing layer 14 is stacked on the strip layer 18. The strip layer 18 is located between a first cushion layer 16 and a second cushion layer 16 in the axial direction. The strip layer 18 is formed from a crosslinked rubber. In the tire 2, the strip layer 18 may not necessarily be provided. In this case, the cord reinforcing layer 14 is stacked on the carcass 12.

Each steel reinforcing layer 20 is located in the bead portion. The steel reinforcing layer 20 is located between the bead 10 and the chafer 8. The steel reinforcing layer 20 is located between the carcass 12 and the chafer 8. The steel reinforcing layer 20 is turned up around the bead 10. The steel reinforcing layer 20 is placed so as to wrap a radially inner portion of the bead 10 from the radially inner side of the turned-up portion 50. An inner end 20s and an outer end 20f of the steel reinforcing layer 20 are located between the end PF of the turned-up portion 50 and the core 36 in the radial direction. The inner end 20s of the steel reinforcing layer 20 is located radially inward of the outer end PU of the inner apex 40.

The steel reinforcing layer 20 includes a large number of filler cords aligned with each other, which are not shown. The material of the filler cords is steel. The steel reinforcing layer 20 includes steel cords. In the steel reinforcing layer 20, the steel cords are covered with a topping rubber.

The outer end 20f of the steel reinforcing layer 20 is located between the turned-up portion 50 and the chafer 8 in the axial direction. The outer end 20f is located radially inward of the end PF of the turned-up portion 50. The inner end 20s is located between the inner liner 24 and the ply body 48 in the axial direction. It is sufficient that the position in the radial direction of the inner end 20s substantially coincides with that of the outer end 20f, and the inner end 20s may be located radially outward of the outer end 20f or may be located radially inward of the outer end 20f.

Each interlayer strip 22 is located between the chafer 8 and the apex 38 in the axial direction. The interlayer strip 22 covers the end PF of the turned-up portion 50 and the outer end 20f of the steel reinforcing layer 20.

The interlayer strip 22 is in contact with the apex 38 on the radially outer side of the end PF of the turned-up portion 50. In other words, the contact surface between the interlayer strip 22 and the apex 38 forms a part of the outer surface of the apex 38 (or the inner surface of the interlayer strip 22).

The interlayer strip 22 is in contact with the chafer 8 on the radially outer side of the outer end 20f of the steel reinforcing layer 20. In other words, the contact surface between the interlayer strip 22 and the chafer 8 forms a part of the inner surface of the chafer 8 (or the outer surface of the interlayer strip 22).

The interlayer strip 22 is formed from a crosslinked rubber. The interlayer strip 22 is harder than the sidewall 6 and is more flexible than the chafer 8. The complex elastic modulus of the interlayer strip 22 is not less than 7.0 MPa and not greater than 12 MPa.

The inner liner 24 is located inward of the carcass 12. The inner liner 24 is joined to the inner surface of the carcass 12 via an insulation (not shown) formed from a crosslinked rubber. The inner liner 24 forms an inner surface of the tire 2. The inner liner 24 is formed from a crosslinked rubber that has an excellent air blocking property.

The tag member 26 is located axially outward of the bead 10. In the tire 2, the tag member 26 is provided only on the side of one sidewall 6 out of the pair of sidewalls 6 provided in the tire 2. The tag member 26 may be provided on each of the side of the one sidewall 6 and the side of the other sidewall 6. From the viewpoint of reducing the risk of damage, preferably, the tag member 26 is provided on the side of the one sidewall 6 out of the pair of sidewalls 6.

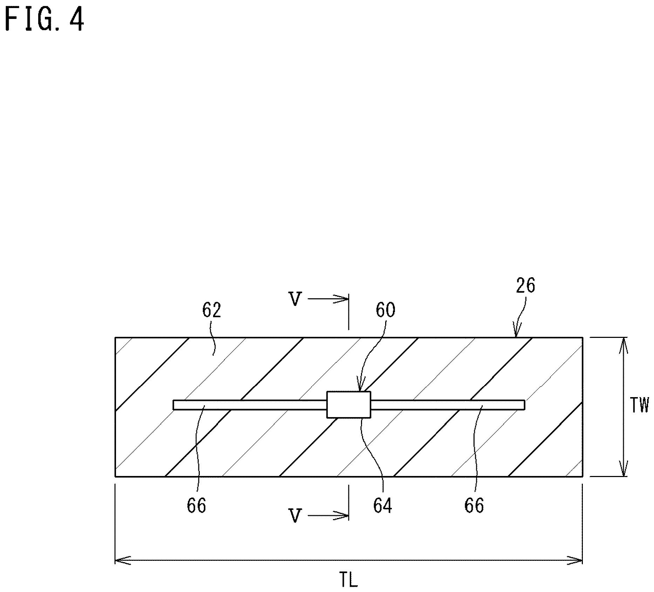

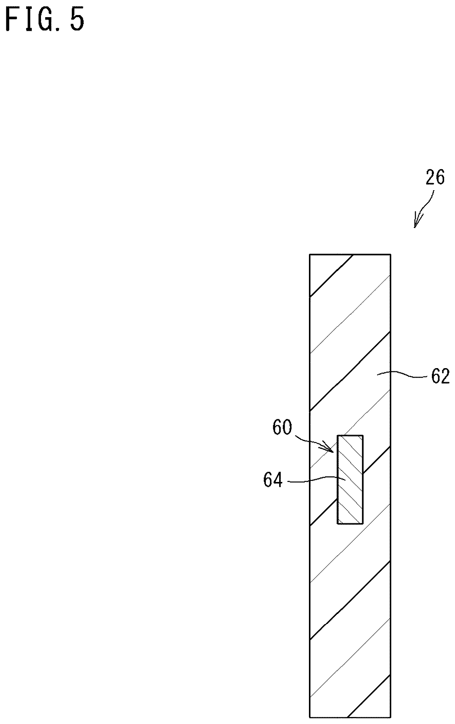

FIG. 4 is a plan view of the tag member 26. FIG. 5 is a cross-sectional view taken along a line V-V in FIG. 4.

The tag member 26 has a plate shape. The tag member 26 is long in a length direction thereof and short in a width direction thereof. As shown in FIG. 2, in the tire 2, the tag member 26 is placed such that a first end 26s in the width direction thereof is located on the radially outer side in the tire 2 and a second end 26u in the width direction thereof is located on the radially inner side in the tire 2. In the tire 2, the first end 26s is also referred to as outer end, and the second end 26u is also referred to as inner end.

The tag member 26 includes an RFID tag 60. In FIG. 4, for convenience of description, the RFID tag 60 is shown by a solid line, but the entirety thereof is covered with a protector 62. The tag member 26 includes the RFID tag 60 and the protector 62. The RFID tag 60 is located at the center of the tag member 26. The protector 62 is formed from a crosslinked rubber. The protector 62 is substantially equal to the outer apex 42 in stiffness. The protector 62 is more flexible than the edge strip 44. The protector 62 is more flexible than the interlayer strip 22. In the tire 2, formation of a good communication environment is considered, and a crosslinked rubber having high electrical resistance is used for the protector 62. The protector 62 is formed from a rubber that has high insulation properties.

Although not described in detail, the RFID tag 60 is a small and lightweight electronic component that includes: a semiconductor chip 64 obtained by making a transmitter/receiver circuit, a control circuit, a memory, etc., into a chip; and an antenna 66. Upon receiving interrogation radio waves, the RFID tag 60 uses the radio waves as electrical energy and transmits various data in the memory as response radio waves. The RFID tag 60 is a type of passive radio frequency identification transponder.

The tag member 26 is a plate-shaped member in which the RFID tag 60 is covered with a crosslinked rubber. From the viewpoint of reducing the risk of damage to the RFID tag 60 and forming a good communication environment, the thickness of the tag member 26 in the tire 2 is preferably not less than 1.0 mm and not greater than 2.5 mm. The thickness of the tag member 26 in the tire 2 is represented as the maximum thickness of the tag member 26 at the semiconductor chip 64 of the RFID tag 60.

A length TL of the tag member 26 before embedding in the tire 2 is not less than 60 mm and not greater than 80 mm. A width TW thereof is not less than 10 mm and not greater than 20 mm.

In FIG. 2, a position indicated by reference sign TU is a radially inner end of the RFID tag 60 (specifically, the semiconductor chip 64). A position indicated by reference sign TS is a radially outer end of the semiconductor chip 64, that is, a radially outer end of the RFID tag 60.

In the present invention, the case where the inner end TU of the RFID tag 60 in the tire 2 is located radially outward of a position serving as a reference (hereinafter, reference position) is the case where the RFID tag 60 is located radially outward of the reference position. The case where the outer end TS of the RFID tag 60 in the tire 2 is located radially inward of the reference position is the case where the RFID tag 60 is located radially inward of the reference position.

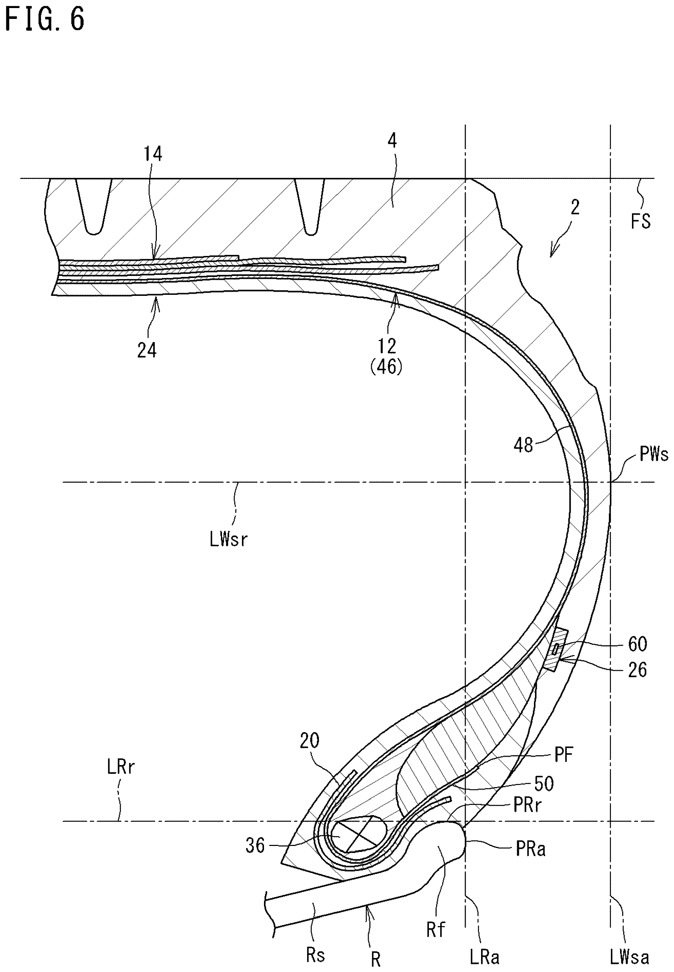

FIG. 6 shows a part of a meridian cross-section of the tire 2 in a ground-contact state. The cross-section in FIG. 6 is a trace of a cross-sectional image of the tire 2 taken by, for example, a computer tomography method using X-rays (hereinafter, X-ray CT method) in a state where a load equal to 50% of the normal load is applied to the tire 2 in the normal state and the tire 2 is brought into contact with a flat surface FS.

In the present invention, the state where a load equal to 50% of the normal load is applied to the tire 2 in the normal state and the tire 2 is brought into contact with the flat surface FS is also referred to as standard ground-contact state.

In the standard ground-contact state shown in FIG. 6, the camber angle of the tire 2 is set to 0 degrees.

In FIG. 6, a position indicated by reference sign PRa is an axially outer end of a flange Rf of the rim R. An alternate long and short dash line indicated by reference sign LRa is a straight line that passes through the axially outer end PRa and that extends in the radial direction.

A position indicated by reference sign PRr is a radially outer end of the flange Rf. An alternate long and short dash line indicated by reference sign LRr is a straight line that passes through the radially outer end PRr and that extends in the axial direction.

In FIG. 6, a position indicated by reference sign PWs is a maximum width position of the tire 2 in the standard ground-contact state. An alternate long and short dash line indicated by reference sign LWsa is a straight line that passes through the maximum width position PWs and that extends in the radial direction. An alternate long and short dash line indicated by reference sign LWsr is a straight line that passes through the maximum width position PWs and that extends in the axial direction.

As shown in FIG. 6, in the standard ground-contact state, the RFID tag 60 is located between the axially outer end PRa of the rim R and the maximum width position PWs of the tire 2 in the axial direction, and is located between the radially outer end PRr of the rim R and the maximum width position PWs in the radial direction. In other words, the RFID tag 60 is located in a region surrounded by the alternate long and short dash lines LWsr and LWsa and the alternate long and short dash lines LRr and LRa.

In the tire 2, the RFID tag 60 is placed away from the vicinity of an end portion of the flange Rf and the vicinity of the maximum width position PWs where large strain may be generated if the RFID tag 60 is present. In the tire 2, the presence of the RFID tag 60 is inhibited from promoting an increase in strain.

In the tire 2, occurrence of damage due to the presence of the RFID tag 60 is suppressed. Moreover, occurrence of damage to the RFID tag 60 itself is also suppressed.

In the tire 2, good durability is maintained even though the RFID tag 60 is incorporated into the tire 2.

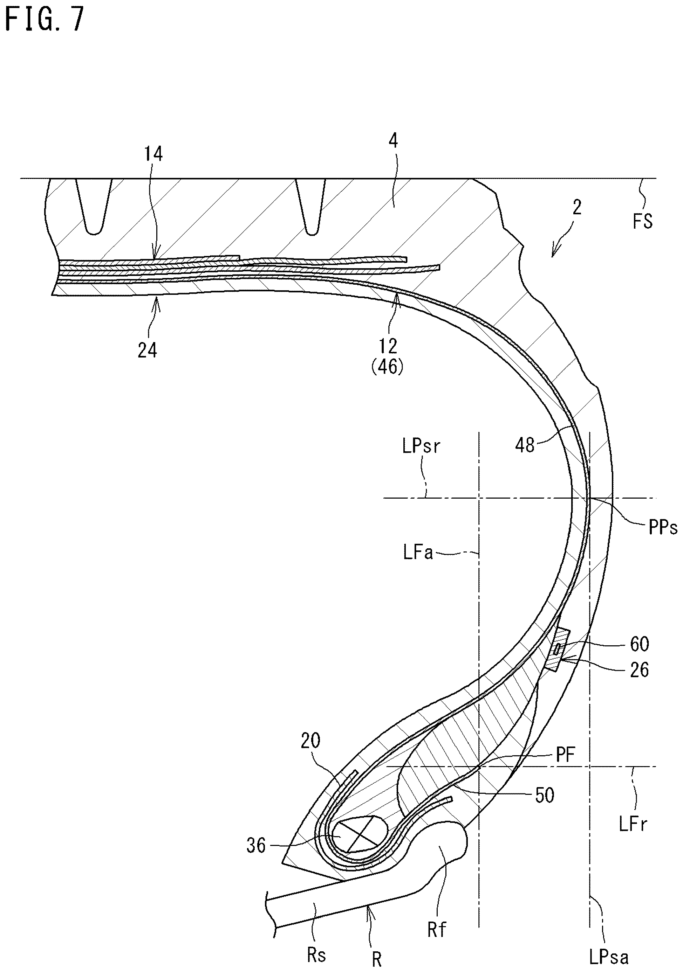

FIG. 7 shows a part of the meridian cross-section of the tire 2 in the ground-contact state. FIG. 7 shows the same cross-section as shown in FIG. 6.

In FIG. 7, an alternate long and short dash line indicated by reference sign LFa is a straight line that passes through the end PF of the turned-up portion 50 and that extends in the radial direction. An alternate long and short dash line indicated by reference sign LFr is a straight line that passes through the end PF of the turned-up portion 50 and that extends in the axial direction.

In FIG. 7, a position indicated by reference sign PPs is a maximum width position of the carcass 12 in the standard ground-contact state. An alternate long and short dash line indicated by reference sign LPsa is a straight line that passes through the maximum width position PPs and that extends in the radial direction. An alternate long and short dash line indicated by reference sign LPsr is a straight line that passes through the maximum width position PPs and that extends in the axial direction.

As shown in FIG. 7, in the standard ground-contact state, the RFID tag 60 is located between the end PF of the turned-up portion 50 and the maximum width position PPs of the carcass 12 in the axial direction, and is located between the end PF of the turned-up portion 50 and the maximum width position PPs of the carcass 12 in the radial direction. In other words, the RFID tag 60 is located in a region surrounded by the alternate long and short dash lines LPsr and LPsa and the alternate long and short dash lines LFr and LFa.

In the tire 2, the RFID tag 60 is placed sufficiently away from the vicinity of the end portion of the flange Rf and the vicinity of the maximum width position PWs where large strain may be generated if the RFID tag 60 is present. In the tire 2, the presence of the RFID tag 60 is effectively inhibited from promoting an increase in strain.

In the tire 2, occurrence of damage due to the presence of the RFID tag 60 is effectively suppressed. Moreover, occurrence of damage to the RFID tag 60 itself is also effectively suppressed.

In the tire 2, good durability is maintained even though the RFID tag 60 is incorporated into the tire 2. From this viewpoint, in the tire 2, preferably, in the standard ground-contact state, the RFID tag 60 is located between the end PF of the turned-up portion 50 and the maximum width position PPs of the carcass 12 in the axial direction, and is located between the end PF of the turned-up portion 50 and the maximum width position PPs of the carcass 12 in the radial direction.

In FIG. 1, a length indicated by a double-headed arrow t is the shortest distance from the outer surface of the tire 2 to the RFID tag 60. The shortest distance t is the thickness of the rubber covering the RFID tag 60.

In the tire 2, the shortest distance t is preferably not less than 3.5 mm. Accordingly, the RFID tag 60 is covered with the rubber having a sufficient thickness. In the tire 2, the presence of the RFID tag 60 is effectively inhibited from promoting an increase in strain. In the tire 2, occurrence of damage due to the presence of the RFID tag 60 is effectively suppressed. From this viewpoint, the shortest distance t is more preferably not less than 4.0 mm. The upper limit of the shortest distance t varies depending on the position of the RFID tag 60, and thus a preferable upper limit of the shortest distance t is not set.

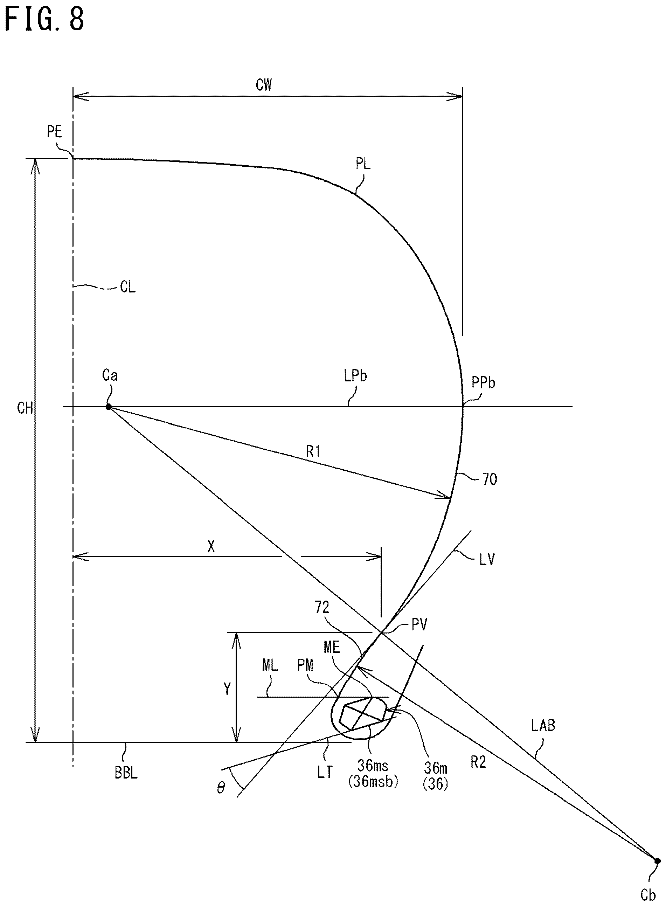

FIG. 8 shows a contour PL of the carcass 12 in the meridian cross-section of the tire 2 in the normal state.

The contour PL of the carcass 12 shown in FIG. 8 can be specified, for example, using a cross-sectional image of the tire 2 taken by the above-described X-ray CT method. In this case, the cross-sectional image of the tire 2 taken by the X-ray CT method is captured in computer-aided design (CAD), and the contour PL of the carcass 12 is specified on this CAD.

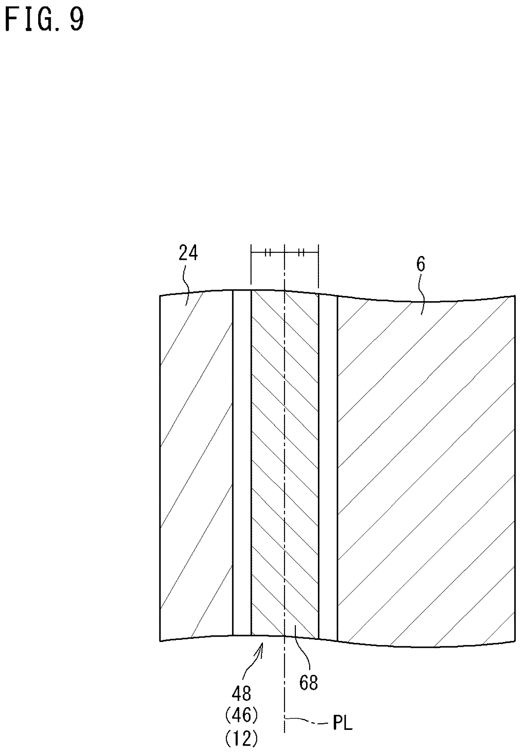

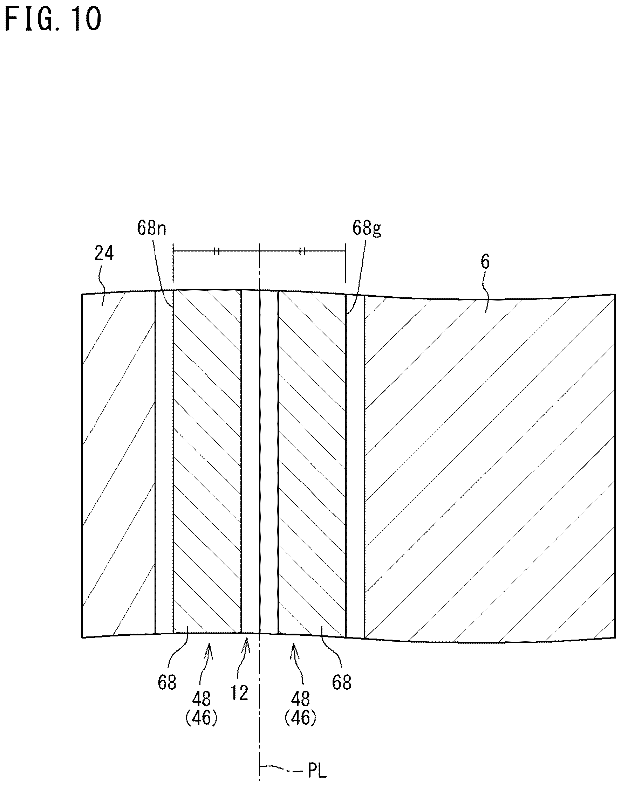

FIG. 9 shows a part of the meridian cross-section of the tire 2. As shown in FIG. 9, the contour PL of the carcass 12 is represented by a line obtained by connecting the centers of carcass cords 68 included in the ply body 48. FIG. 10 shows the case where the carcass 12 includes two carcass plies 46 as an example of the case where the carcass 12 includes a plurality of carcass plies 46, as a modification of the carcass 12. In this case, in the cross-section shown in FIG. 10, the contour PL of the carcass 12 is represented by a line obtained by connecting the centers between inner edges 68n of carcass cords 68 included in the ply body 48 located on the inner side and outer edges 68g of carcass cords 68 included in the ply body 48 located on the outer side. In FIG. 9 and FIG. 10, components located on both sides of the carcass cords 68 are topping rubbers covering the carcass cords 68, although these components are not denoted by any reference sign.

In FIG. 8, a position indicated by reference sign PE is the point of intersection of the contour PL (hereinafter, case line PL) of the carcass 12 and the equator plane CL. The point of intersection PE corresponds to the equator at the case line PL. A length indicated by reference sign CH is the distance in the radial direction from the bead base line BBL to the equator PE.

In the tire 2, the equator PE coincides with the radially outer end of the case line PL. The distance CH in the radial direction is also the cross-sectional height of the carcass 12.

In FIG. 8, a position indicated by reference sign PPb is an axially outer end of the case line PL in the normal state. In the tire 2 in the normal state, the case line PL indicates a maximum width at the axially outer end PPb. The axially outer end PPb is also referred to as maximum width position of the case line PL (or maximum width position of the carcass 12). A length indicated by reference sign CW is the distance in the axial direction from the equator plane CL to the axially outer end PPb. Although not shown in FIG. 8, the outer end PA of the apex 38 is located radially inward of the axially outer end PPb.

In FIG. 8, a position indicated by reference sign ME is the radially outer end of the core body 36m. A solid line indicated by reference sign ML is a straight line that passes through the radially outer end ME and extends in the axial direction. A position indicated by reference sign PM is the point of intersection of the straight line ML and the case line PL. The point of intersection PM is a position, on the case line PL, corresponding to the radially outer end ME of the core body 36m. The point of intersection PM is a reference point of the case line PL.

In the tire 2, the case line PL is formed by combining a plurality of arcs and, if necessary, connecting the arcs to each other via straight lines. The case line PL has an outwardly convex shape at the tread portion, has an outwardly convex shape at the sidewall portion and a radially outer portion of each bead portion, and has an inwardly concave shape at a radially inner portion of each bead portion. In the bead portion, an inflection point between an outwardly bulging portion and an inwardly recessed portion exists.

In the present invention, outwardly bulging means a shape curved from the inner surface side toward the outer surface side of the tire, and inwardly recessed means a shape curved from the outer surface side toward the inner surface side of the tire.

In the tire 2, of the case line PL, a radially inner portion from the axially outer end PPb, specifically, a portion from the axially outer end PPb to the reference point PM includes an outwardly bulging curved portion 70 and an inwardly recessed inversely curved portion 72. That is, in the meridian cross-section of the tire 2 in the normal state, the contour of the carcass 12 includes, in the radially inner portion from the maximum width position PPb of the carcass 12, the curved portion 70 and the inversely curved portion 72 located radially inward of the curved portion 70.

The inversely curved portion 72 is located radially inward of the curved portion 70, and is connected to the curved portion 70. The boundary between the curved portion 70 and the inversely curved portion 72 is the above-described inflection point. In FIG. 8, a position indicated by reference sign PV is the inflection point.

The curved portion 70 of the tire 2 shown in FIG. 8 is represented by a single arc. This arc has a center Ca on a straight line (solid line LPb in FIG. 8) that passes through the axially outer end PPb and that extends in the axial direction, and includes the axially outer end PPb and the inflection point PV. In FIG. 8, an arrow indicated by reference sign R1 represents the radius of this arc.

Although not shown, in the tire 2, the curved portion 70 may be represented by an arc (hereinafter, arc a) having a center on the straight line LPb and including the axially outer end PPb and an arc (hereinafter, arc b) tangent to the arc a and including the inflection point PV. In this case, the center of the arc b is located on a straight line passing through the center of the arc a and the tangent point between the arc a and the arc b.

In the tire 2, an arc having a center on the straight line LPb and including the axially outer end PPb and an arc including the inflection point PV may be connected to each other via one or more arcs. In this case, the curved portion 70 is represented by a plurality of arcs that include an arc having a center on the straight line LPb and including the axially outer end PPb and an arc including the inflection point PV, and is formed such that adjacent two arcs are tangent to each other.

In either case, the curved portion 70 includes an arc including the inflection point PV. In the present invention, the arc passing through the inflection point PV is a first arc.

In the tire 2, a part or the entirety of the curved portion 70 is represented by the first arc passing through the inflection point PV.

In the tire 2 shown in FIG. 8, the inversely curved portion 72 is also represented by a single arc. This arc has a center Cb on a straight line (solid line LAB in FIG. 8) passing through the inflection point PV and the center Ca of the arc (first arc) representing the curved portion 70, and includes the inflection point PV and the reference point PM. In FIG. 8, an arrow indicated by reference sign R2 represents the radius of this arc.

Although not shown, in the tire 2, the inversely curved portion 72 may be represented by an arc (hereinafter, arc c) including the inflection point PV and an arc (hereinafter, arc d) tangent to the arc c and including the reference point PM. In this case, the center of the arc d is located on a straight line passing through the center of the arc c and the tangent point between the arc c and the arc d. In the tire 2, an arc including the inflection point PV and an arc including the reference point PM may be connected to each other via one or more arcs. In this case, the inversely curved portion 72 is represented by a plurality of arcs that include an arc including the inflection point PV and an arc including the reference point PM, and is formed such that adjacent two arcs are tangent to each other.

In either case, the inversely curved portion 72 includes an arc including the inflection point PV. In the present invention, the arc passing through the inflection point PV is a second arc.

If the configuration of the case line PL is unknown, the first arc representing the curved portion 70, the second arc representing the inversely curved portion 72, and the inflection point PV are obtained as follows.

The case line PL is specified on the basis of a cross-sectional image, of the tire in the normal state, taken by the X-ray CT method. The axially outer end PPb of the case line PL is obtained. An outwardly convex arc (hereinafter, outward arc) having a center on the straight line LPb, which passes through the axially outer end PPb and extends in the axial direction, and including the axially outer end PPb is drawn. By drawing the outward arc while changing the radius thereof, an outward arc (hereinafter, first outward arc) having the maximum overlap length with the case line PL from the axially outer end PPb is obtained. If the entirety of the curved portion 70 cannot be represented by the first outward arc, another outward arc having a center on a straight line passing through an end of the first outward arc and the center of the first outward arc is drawn. The outward arc is drawn while changing the radius thereof, and an outward arc (hereinafter, second outward arc) having the maximum overlap length with the case line PL from the end of the first outward arc is obtained. Tracing of the case line PL by the outward arc is repeated until the case line PL can no longer be traced by the outward arc. The end on the core body 36m side of an outward arc drawn last is specified as the inflection point PV, and this outward arc is specified as a first arc including the inflection point PV and representing a part or the entirety of the curved portion 70.

An inwardly convex arc (hereinafter, inward arc) including the inflection point PV and having a center on a straight line passing through the center of the first arc specified as described above and the inflection point PV and on the side opposite to the center of the first arc across the inflection point PV, is drawn. By drawing the inward arc while changing the radius thereof, an inward arc (hereinafter, first inward arc) having the maximum overlap length with the case line PL from the inflection point PV is obtained. The first inward arc is specified as a second arc including the inflection point PV and representing a part or the entirety of the inversely curved portion 72. If the entirety of the inversely curved portion 72 cannot be drawn by the first inward arc, tracing by the inward arc is repeated until the last inward arc including the reference point PM is drawn.

In the tire 2, a part or the entirety of the inversely curved portion 72 is represented by a second arc passing through the inflection point PV. The first arc representing a part or the entirety of the curved portion 70 and the second arc representing a part or the entirety of the inversely curved portion 72 are tangent to each other at the inflection point PV. The inflection point PV is located between the center of the first arc and the center of the second arc, and the center of the first arc, the inflection point PV, and the center of the second arc are located on the same straight line.

In the case line PL shown in FIG. 8, the first arc representing the curved portion 70 and the second arc representing the inversely curved portion 72 are tangent to each other at the inflection point PV. The inflection point PV is located between the center Ca of the first arc and the center Cb of the second arc, and the center Ca of the first arc, the inflection point PV, and the center Cb of the second arc are located on the same straight line LAB.

As shown in FIG. 2, in the tire 2, the inflection point PV is located, in the axial direction, between a radially outer end ME of the core body 36m and the outer end PU of the inner apex 40, and is located, in the radial direction, between the end PF of the turned-up portion 50 and the outer end PU of the inner apex 40.

In the tire 2, a particularly large load is applied to a radially inner portion of the case line PL from the inflection point PV, and thus the radially inner portion from the inflection point PV is a region where, if foreign matter is present, strain due to the presence of the foreign matter is likely to be generated.

As shown in FIG. 2, in the tire 2, the RFID tag 60 is located radially outward of the inflection point PV. Accordingly, the presence of the RFID tag 60 is effectively inhibited from promoting an increase in strain.

In the tire 2, occurrence of damage due to the presence of the RFID tag 60 is effectively suppressed. Moreover, occurrence of damage to the RFID tag 60 itself is also effectively suppressed.

In the tire 2, good durability is maintained even though the RFID tag 60 is incorporated into the tire 2. From this viewpoint, preferably, the RFID tag 60 is located radially outward of the inflection point PV.

In FIG. 8, a length indicated by reference sign X is the distance in the axial direction from the equator plane CL of the tire 2 to the inflection point PV. A length indicated by reference sign Y is the distance in the radial direction from the bead base line BBL to the inflection point PV.

In the tire 2, preferably, the ratio (X/CW) of the distance X in the axial direction from the equator plane CL to the inflection point PV to the distance CW in the axial direction from the equator plane CL to the axially outer end PPb is not less than 70% and not greater than 85%, and the ratio (Y/CH) of the distance Y in the radial direction from the bead base line BBL to the inflection point PV to the distance CH in the radial direction from the bead base line BBL to the equator PE is not less than 15% and not greater than 22%.

When the ratio (X/CW) is set to be not less than 70% and the ratio (Y/CH) is set to be not less than 15%, the inflection point PV is located at an appropriate interval from the core 36. The RFID tag 60 which is located radially outward of the inflection point PV is effectively inhibited from promoting an increase in strain. In the tire 2, occurrence of damage due to the presence of the RFID tag 60 is effectively suppressed. Moreover, occurrence of damage to the RFID tag 60 itself is also effectively suppressed. From this viewpoint, more preferably, the ratio (X/CW) is not less than 75%, and the ratio (Y/CH) is not less than 17%.

When the ratio (X/CW) is set to be not greater than 85% and the ratio (Y/CH) is set to be not greater than 22%, the inflection point PV is located at an appropriate interval from the maximum width position PPb. Deformation of the carcass 12 at the bead portion when the tire 2 is inflated is suppressed, and in this case as well, the RFID tag 60 which is located radially outward of the inflection point PV is effectively inhibited from promoting an increase in strain. In the tire 2, occurrence of damage due to the presence of the RFID tag 60 is effectively suppressed. Moreover, occurrence of damage to the RFID tag 60 itself is also effectively suppressed. From this viewpoint, more preferably, the ratio (X/CW) is not greater than 80%, and the ratio (Y/CH) is not greater than 20%.

In FIG. 8, a solid line LV is a tangent line that is tangent to the case line PL at the inflection point PV. A solid line LT is a straight line that includes a straight line representing the contour of the bottom surface 36msb of the core body 36m in the meridian cross-section of the tire 2. An angle θ is an angle formed between the tangent line LV and the straight line LT. In the present invention, the angle θ is an angle formed between the tangent line LV which is tangent to the contour of the carcass 12 at the inflection point PV and the straight line representing the contour of the bottom surface 36msb.

In the tire 2, the angle θ is preferably not less than 25 degrees and not greater than 30 degrees.

When the angle θ is set to be not less than 25 degrees, falling-down of the case line PL at the bead portion is effectively suppressed. Strain caused by the action of a load is inhibited from being increased, so that the RFID tag 60 which is located radially outward of the inflection point PV is effectively inhibited from promoting an increase in strain. In the tire 2, occurrence of damage due to the presence of the RFID tag 60 is effectively suppressed. Moreover, occurrence of damage to the RFID tag 60 itself is also effectively suppressed. From this viewpoint, the angle θ is more preferably not less than 26 degrees.

When the angle θ is set to be not greater than 30 degrees, deformation of the carcass 12 at the bead portion when the tire 2 is inflated is suppressed. In this case as well, the RFID tag 60 which is located radially outward of the inflection point PV is effectively inhibited from promoting an increase in strain. In the tire 2, occurrence of damage due to the presence of the RFID tag 60 is effectively suppressed. Moreover, occurrence of damage to the RFID tag 60 itself is also effectively suppressed. From this viewpoint, the angle θ is more preferably not greater than 29 degrees.

In the tire 2, the tag member 26 is located axially outward of the outer apex 42 on the radially outer side of the end PF of the turned-up portion 50. The tag member 26 is in contact with the outer apex 42. The boundary between the tag member 26 and the outer apex 42 forms a part of the outer surface of the outer apex 42. In other words, the boundary between the tag member 26 and the outer apex 42 forms a part of the outer surface of the apex 38.

In the tire 2, the RFID tag 60 is located between the outer end PG2 of the outer apex 42 and the end PF of the turned-up portion 50 in the radial direction.

The RFID tag 60 of the tire 2 is placed in the bead portion where the degree of bending is small. In the tire 2, the risk of damage to the RFID tag 60 is low.

Since the outer apex 42 which is more flexible than the inner apex 40 is located axially inward of the RFID tag 60, the presence of the RFID tag 60 is effectively inhibited from promoting an increase in strain. In the tire 2, occurrence of damage due to the presence of the RFID tag 60 is suppressed. Moreover, occurrence of damage to the RFID tag 60 itself is also suppressed. In the tire 2, good durability is maintained even though the RFID tag 60 is incorporated into the tire 2.

In the tire 2, the outer apex 42 is located between the carcass ply 46 and the RFID tag 60. The RFID tag 60 is placed so as to be spaced apart from the carcass ply 46 including the carcass cords which are metal components. Radio waves are less likely to be disturbed, so that a good communication environment is formed between the RFID tag 60 and a communication device (not shown). Writing of data to the RFID tag 60 and reading of data recorded in the RFID tag 60 are accurately performed.

From the viewpoint of maintaining good durability while achieving formation of a good communication environment and reduction of the risk of damage to the RFID tag 60, preferably, the tag member 26 is in contact with the outer apex 42 on the radially outer side of the end PF of the turned-up portion 50, and the RFID tag 60 is located between the outer end PG2 of the outer apex 42 and the end PF of the turned-up portion 50 in the radial direction. From the same viewpoint, more preferably, the RFID tag 60 is located between the outer end PG2 of the outer apex 42 and the outer end PB of the chafer 8 in the radial direction.

In the tire 2, the inner end 26u of the tag member 26 is located radially outward of the outer end PB of the chafer 8. In the tire 2, the entirety of the tag member 26 is placed radially outward of the outer end PB of the chafer 8. Interference of the tag member 26 with the outer end PB of the chafer 8 is effectively suppressed, so that waving of the outer end PB of the chafer 8 (i.e., occurrence of creases) is effectively suppressed. The presence of the RFID tag 60 is effectively inhibited from promoting an increase in strain. In the tire 2, occurrence of damage due to the presence of the RFID tag 60 is suppressed. Moreover, occurrence of damage to the RFID tag 60 itself is also suppressed. In the tire 2, good durability is maintained even though the RFID tag 60 is incorporated into the tire 2. From this viewpoint, in the tire 2, the inner end 26u of the tag member 26 is preferably located radially outward of the outer end PB of the chafer 8. The inner end 26u of the tag member 26 is located radially outward of the outer end of the interlayer strips 22.

As shown in FIG. 2, the outer end 26s of the tag member 26 is located radially inward of the outer end PA of the apex 38. In other words, in the tire 2, the outer end 26s of the tag member 26 is located radially inward of the outer end PG2 of the outer apex 42. Accordingly, the influence of the tag member 26 on bending of the sidewall portion is effectively suppressed. With the tire 2, good durability and ride comfort are maintained. From this viewpoint, the outer end 26s of the tag member 26 is preferably located radially inward of the outer end PG2 of the outer apex 42.

In the tire 2, more preferably, the inner end 26u of the tag member 26 is located radially outward of the outer end PB of the chafer 8, and the outer end 26s of the tag member 26 is located radially inward of the outer end PG2 of the outer apex 42. In this case, as shown in FIG. 2, the entirety of the tag member 26 is placed between the outer end PG2 of the outer apex 42 and the outer end PB of the chafer 8.

As described above, the tag member 26 is in contact with the outer apex 42. As shown in FIG. 2, the tag member 26 is covered with the sidewall 6. The tag member 26 is also in contact with the sidewall 6. Between the outer end PG2 of the outer apex 42 and the outer end PB of the chafer 8, the tag member 26 is interposed between the outer apex 42 and the sidewall 6.

The tire 2 can achieve improvement of the readability of the RFID tag 60 and reduction of the risk of damage to the RFID tag 60 while suppressing influence on durability. From this viewpoint, further preferably, between the outer end PG2 of the outer apex 42 and the outer end PB of the chafer 8, the tag member 26 is interposed between the outer apex 42 and the sidewall 6.

In the tire 2, the outer end PB of the chafer 8 is located radially outward of the inner end PS of the sidewall 6, and the sidewall 6 covers the outer end PB of the chafer 8. Since the outer end PB of the chafer 8 is covered with the sidewall 6, strain applied to the outer end PB is effectively alleviated. In the tire 2, the chafer 8 is harder than the sidewall 6. Therefore, by covering the outer end PB of the chafer 8 with the sidewall 6, strain applied to the outer end PB is more effectively alleviated. In the tire 2, occurrence of damage due to the presence of the RFID tag 60 is suppressed. Moreover, occurrence of damage to the RFID tag 60 itself is also suppressed. In the tire 2, good durability is maintained even though the RFID tag 60 is incorporated into the tire 2. From this viewpoint, in the tire 2, preferably, the outer end PB of the chafer 8 is located radially outward of the inner end PS of the sidewall 6, and the sidewall 6 covers the outer end PB of the chafer 8.

In FIG. 2, a length indicated by reference sign Rb1 is the distance in the radial direction from the bead base line BBL to the outer end PB of the chafer 8. The distance Rb1 in the radial direction is also referred to as radial height of the outer end PB of the chafer 8.

In FIG. 2, a length indicated by reference sign K2 is the distance in the radial direction from the bead base line BBL to the inner end PS of the sidewall 6. The distance K2 in the radial direction is also referred to as radial height of the inner end PS of the sidewall 6.

In the tire 2, the ratio (L1/Rb1) of the radial height L1 of the outer end PG2 of the outer apex 42 to the radial height Rb1 of the outer end PB of the chafer 8 is preferably not less than 1.08 and not greater than 1.54.

When the ratio (L1/Rb1) is set to be not less than 1.08, a space for placing the tag member 26 is ensured. The tire 2 allows the tag member 26 to be placed at a position at which interference with the outer end PB of the chafer 8 is less likely to occur. In the tire 2, the presence of the RFID tag 60 is effectively inhibited from promoting an increase in strain. From this viewpoint, the ratio (L1/Rb1) is more preferably not less than 1.12.

When the ratio (L1/Rb1) is set to be not greater than 1.54, the influence of the outer apex 42 on bending of the tire 2 is suppressed. With the tire 2, good ride comfort is maintained. From this viewpoint, the ratio (L1/Rb1) is more preferably not greater than 1.42.

In the tire 2, the ratio (Rb1/K2) of the radial height Rb1 of the outer end PB of the chafer 8 to the radial height K2 of the inner end PS of the sidewall 6 is not less than 2.00 and not greater than 3.25.

When the ratio (Rb1/K2) is set to be not less than 2.00, a region where the sidewall 6 and the chafer 8 are joined together can be sufficiently ensured. In the tire 2, strain applied to the outer end PB of the chafer 8 is more effectively alleviated. In the tire 2, the presence of the RFID tag 60 is effectively inhibited from promoting an increase in strain. From this viewpoint, the ratio (Rb1/K2) is more preferably not less than 2.20.

When the ratio (Rb1/K2) is set to be not greater than 3.25, a space for placing the tag member 26 is ensured. The tire 2 allows the tag member 26 to be placed at a position at which interference with the outer end PB of the chafer 8 is less likely to occur. In this case as well, the presence of the RFID tag 60 is effectively inhibited from promoting an increase in strain. From this viewpoint, the ratio (Rb1/K2) is more preferably not greater than 3.00.

In the tire 2, the outer end PU of the inner apex 40 is located between the end PF of the turned-up portion 50 and the RFID tag 60 in the radial direction. Accordingly, the hard inner apex 40 effectively increases the stiffness of the bead portion. Strain applied to the RFID tag 60 is effectively reduced. The presence of the RFID tag 60 is effectively inhibited from promoting an increase in strain. From this viewpoint, the outer end PU of the inner apex 40 is preferably located between the end PF of the turned-up portion 50 and the RFID tag 60 in the radial direction. In this case, from the viewpoint of being able to more effectively inhibit the presence of the RFID tag 60 from promoting an increase in strain, more preferably, the outer end PU of the inner apex 40 is located between the end PF of the turned-up portion 50 and the RFID tag 60 in the radial direction, and further, the outer end PU of the inner apex 40 is located between the end PF of the turned-up portion 50 and the outer end PB of the chafer 8 in the radial direction. The outer end PB of the chafer 8 is located radially outward of the outer end PU of the inner apex 40, and the end PF of the turned-up portion 50 is located radially inward of the outer end PU of the inner apex 40, further more preferably.

As is obvious from the above description, according to the present invention, the heavy duty tire 2 that can suppress occurrence of damage due to the presence of the RFID tag 60 is obtained.

### INDUSTRIAL APPLICABILITY

The above-described technology capable of suppressing occurrence of damage due to the presence of an RFID tag can be applied to various tires.

### REFERENCE SIGNS LIST

- 2: tire
- 4: tread
- 6: sidewall
- 8: chafer
- 10: bead
- 12: carcass
- 14: cord reinforcing layer
- 20: steel reinforcing layer
- 22: interlayer strip
- 26: tag member
- 36: core
- 38: apex
- 40: inner apex
- 42: outer apex
- 44: edge strip
- 46: carcass ply
- 48: ply body
- 50: turned-up portion
- 52: belt
- 54: belt ply
- 56: band
- 58: full band
- 60: RFID tag
- 62: protector
- 64: semiconductor chip
- 66: antenna
- 68: carcass cord
- 70: curved portion
- 72: inversely curved portion

## Claims

1. A heavy duty tire (2) comprising:
a pair of beads (10);
a carcass (12) extending on and between the pair of beads (10);
a belt (52) located radially outward of the carcass (12) and including a large number of belt cords aligned with each other;
a pair of sidewalls (6) each located axially outward of the carcass (12);
a pair of chafers (8) each located radially inward of the sidewall (6) and configured to come into contact with a rim (R), which is a normal rim, a normal rim being a rim specified in a standard on which the tire is based, such as the "standard rim" in the JATMA standard, the "design rim" in the TRA standard, or the "measuring rim" in the ETRTO standard; and
a tag member (26) including an RFID tag (60), wherein
each of the beads (10) includes a core (36) and an apex (38) located radially outward of the core (36),
the carcass (12) includes a carcass ply (46),
the carcass ply (46) includes a ply body (48) extending between the pair of beads (10) and a pair of turned-up portions (50) each connected to the ply body (48) and turned up around the bead (10),
the belt (52) includes three or fewer belt plies (54) aligned in a radial direction,
a state where the tire (2) is fitted on the rim (R) and an internal pressure of the tire (2) is adjusted to a normal internal pressure is a normal state, and
a state where a load equal to 50% of a normal load is applied to the tire (2) in the normal state and the tire (2) is brought into contact with a flat surface (FS) is a standard ground-contact state,
**characterized in that**, in the standard ground-contact state, the RFID tag (60) is located between an axially outer end (PRa) of the rim (R) and a maximum width position (PWs) of the tire (2) in an axial direction, and is located between a radially outer end (PRr) of the rim (R) and the maximum width position (PWs) of the tire (2) in the radial direction,
wherein the tire (2) further comprises a pair of interlayer strips (22), and wherein
each interlayer strip (22) is located between the chafer (8) and the apex (38) in the axial direction, and covers an end (PF) of the turned-up portion (50),
the interlayer strip (22) is harder than the sidewall (6) and is more flexible than the chafer (8), a complex elastic modulus of the interlayer strip (22) being not less than 7.0 MPa and not greater than 12 MPa, a complex elastic modulus of the sidewall (6) being not less than 2.0 MPa and not greater than 6.0 MPa, and a complex elastic modulus of the chafer (8) being not less than 10 MPa and not greater than 15 MPa, wherein a complex elastic modulus is measured according to the standards of JIS K6394 at measurement conditions of an initial strain = 10%, a dynamic strain = ±1 %, a frequency = 10 Hz, a mode = stretch mode, and a temperature = 70°C, and
an inner end (26u) of the tag member (26) is located radially outward of an outer end of the interlayer strip (22).

2. The heavy duty tire (2) according to claim 1, wherein, in the standard ground-contact state, the RFID tag (60) is located between an end of the turned-up portion (50) and a maximum width position (PPs) of the carcass (12) in the axial direction, and is located between the end of the turned-up portion (50) and the maximum width position (PPs) of the carcass (12) in the radial direction.

3. The heavy duty tire (2) according to claim 1 or 2, wherein a shortest distance (t) from an outer surface of the tire (2) to the RFID tag (60) is not less than 3.5 mm.

4. The heavy duty tire (2) according to any one of claims 1 to 3, wherein
in a meridian cross-section of the tire (2) in the normal state, a contour (PL) of the carcass (12) includes, in a radially inner portion from the maximum width position (PPs) of the carcass (12), an outwardly bulging curved portion (70) and an inwardly recessed inversely curved portion (72) located radially inward of the curved portion (70),
the inversely curved portion (72) is connected to the curved portion (70),
a boundary between the curved portion (70) and the inversely curved portion (72) is an inflection point (PV),
a part or an entirety of the curved portion (70) is represented by a first arc including the inflection point (PV),
a part or an entirety of the inversely curved portion (72) is represented by a second arc including the inflection point (PV),
the first arc and the second arc are tangent to each other at the inflection point (PV), and
the RFID tag (60) is located radially outward of the inflection point (PV).

5. The heavy duty tire (2) according to any one of claims 1 to 4, wherein
an outer end (PB) of the chafer (8) is located radially outward of an inner end (PS) of the sidewall (6), and
the sidewall (6) covers the outer end (PB) of the chafer (8).

6. The heavy duty tire (2) according to any one of claims 1 to 5, wherein
the tag member (26) is a plate-shaped member in which the RFID tag (60) is covered with a crosslinked rubber, and
the tag member (26) has a thickness of not less than 1.0 mm and not greater than 2.5 mm.

7. The heavy duty tire (2) according to any one of claims 1 to 6, wherein a number of the belt plies (54) included in the belt (52) is two or less.

8. The heavy duty tire (2) according to any one of claims 1 to 7, further comprising a band (56) located radially outward of the carcass (12) and including a helically wound band cord, wherein
the band (56) includes a full band (58) having ends opposed to each other across an equator plane (CL), and
the belt plies (54) and the full band (58) are aligned in the radial direction.

9. The heavy duty tire (2) according to any one of claims 1 to 8, wherein
the apex (38) includes an inner apex (40) located radially outward of the core (36) and an outer apex (42) located radially outward of the inner apex (40),
the outer apex (42) is more flexible than the inner apex (40), a complex elastic modulus of the outer apex (42) being not less than 3.0 MPa and not greater than 6.0 MPa, and a complex elastic modulus of the inner apex (40) being not less than 60 MPa and not greater than 90 MPa,
the tag member (26) is in contact with the outer apex (42) on a radially outer side of the end (PF) of the turned-up portion (50), and
the RFID tag (60) is located between an outer end (PG2) of the outer apex (42) and the end (PF) of the turned-up portion (50) in the radial direction.

10. The heavy duty tire (2) according to claim 9, wherein, between the outer end (PG2) of the outer apex (42) and an outer end (PB) of the chafer (8), the tag member (26) is located between the outer apex (42) and the sidewall (6).

11. The heavy duty tire (2) according to claim 9 or 10, wherein the outer apex (42) is substantially equal to the sidewall (6) in stiffness, or is harder than the sidewall (6).

12. The heavy duty tire (2) according to any one of claims 9 to 11, wherein the outer apex (42) is more flexible than the chafer (8).

13. The heavy duty tire (2) according to any one of claims 9 to 12, wherein
the tag member (26) further includes a protector (62) covering the entirety of the RFID tag (60), and
the protector (62) is substantially equal to the outer apex (42) in stiffness.

14. The heavy duty tire (2) according to any one of claims 9 to 13, wherein the apex (38) further includes an edge strip (44) located axially outward of the outer apex (42),
the edge strip (44) forms a part of an outer surface of the apex (38),
the edge strip (44) is more flexible than the chafer (8) and is harder than the outer apex (42), a complex elastic modulus of the edge strip (44) being not less than 7.0 MPa and not greater than 12 MPa,
the edge strip (44) is located between an outer end (PB) of the chafer (8) and an inner end (PG1) of the outer apex (42) in the radial direction,
the end of the turned-up portion (50) is in contact with the edge strip (44), and
the tag member (26) is located radially outward of the outer end of the edge strip (44).

## Patentansprüche

1. Reifen für schwere Last (2), umfassend:
ein Paar Wülste (10);
eine Karkasse (12), die sich auf und zwischen dem Paar Wülsten (10) erstreckt;
einen Gürtel (52), der sich radial außen von der Karkasse (12) befindet und eine große Anzahl von Gürtelkorden umfasst, die miteinander ausgerichtet sind;
ein Paar Seitenwände (6), die sich jeweils axial außen von der Karkasse (12) befinden;
ein Paar Wulstschutzbänder (8), die sich jeweils radial innen von der Seitenwand (6) befinden und so ausgestaltet sind, dass sie mit einer Felge (R) in Kontakt kommen, die eine normale Felge ist, wobei eine normale Felge eine Felge ist, die in einem Standard spezifiziert ist, auf dem der Reifen basiert, wie die "Standardfelge" im JATMA-Standard, die "Designfelge" im TRA-Standard oder die "Messfelge" im ETRTO-Standard; und
ein Tag-Element (26), das ein RFID-Tag (60) umfasst, wobei
jeder der Wülste (10) einen Kern (36) und einen Kernreiter (38) umfasst, der sich radial außen von dem Kern (36) befindet,
die Karkasse (12) eine Karkasslage (46) umfasst,
die Karkasslage (46) einen Lagenkörper (48), der sich zwischen dem Paar Wülsten (10) erstreckt, und ein Paar Umschlagabschnitte (50) umfasst, die jeweils mit dem Lagenkörper (48) verbunden und um den Wulst (10) umgeschlagen sind,
der Gürtel (52) drei oder weniger Gürtellagen (54) umfasst, die in einer radialen Richtung ausgerichtet sind,
ein Zustand, in dem der Reifen (2) auf die Felge (R) aufgezogen ist und ein Innendruck des Reifens (2) auf einen normalen Innendruck eingestellt ist, ein normaler Zustand ist, und
ein Zustand, in dem eine Last, die 50 % einer normalen Last beträgt, auf den Reifen (2) in dem normalen Zustand ausgeübt wird und der Reifen (2) mit einer flachen Oberfläche (FS) in Kontakt gebracht wird, ein Standard-Bodenkontaktzustand ist,
**dadurch gekennzeichnet, dass** sich das RFID-Tag (60) in dem Standard-Bodenkontaktzustand zwischen einem axial äußeren Ende (PRa) der Felge (R) und einer Position maximaler Breite (PWs) des Reifens (2) in einer axialen Richtung befindet und sich zwischen einem radial äußeren Ende (PRr) der Felge (R) und der Position maximaler Breite (PWs) des Reifens (2) in der radialen Richtung befindet,
wobei der Reifen (2) ferner ein Paar Zwischenschichtstreifen (22) umfasst, und wobei
sich jeder Zwischenschichtstreifen (22) zwischen dem Wulstschutzstreifen (8) und dem Kernreiter (38) in der axialen Richtung befindet und ein Ende (PF) des Umschlagabschnitts (50) bedeckt,
der Zwischenschichtstreifen (22) härter als die Seitenwand (6) und flexibler als der Wulstschutzstreifen (8) ist, ein komplexer Elastizitätsmodul des Zwischenschichtstreifens (22) nicht weniger als 7,0 MPa und nicht mehr als 12 MPa beträgt, ein komplexer Elastizitätsmodul der Seitenwand (6) nicht weniger als 2,0 MPa und nicht mehr als 6,0 MPa beträgt und ein komplexer Elastizitätsmodul des Wulstschutzstreifens (8) nicht weniger als 10 MPa und nicht mehr als 15 MPa beträgt, wobei ein komplexer Elastizitätsmodul gemäß den Standards von JIS K6394 bei Messbedingungen einer Anfangsdehnung = 10 %, einer dynamischen Dehnung = ±1 %, einer Frequenz = 10 Hz, eines Modus = Streckmodus und einer Temperatur = 70 °C gemessen wird, und
sich ein inneres Ende (26u) des Tag-Elements (26) radial außen von einem äußeren Ende des Zwischenschichtstreifens (22) befindet.

2. Reifen für schwere Last (2) nach Anspruch 1, wobei sich das RFID-Tag (60) in dem Standard-Bodenkontaktzustand zwischen einem Ende des Umschlagabschnitts (50) und einer Position maximaler Breite (PPs) der Karkasse (12) in der axialen Richtung befindet und sich zwischen dem Ende des Umschlagabschnitts (50) und der Position maximaler Breite (PPs) der Karkasse (12) in der radialen Richtung befindet.

3. Reifen für schwere Last (2) nach Anspruch 1 oder 2, wobei ein kürzester Abstand (t) von einer äußeren Oberfläche des Reifens (2) zu dem RFID-Tag (60) nicht weniger als 3,5 mm beträgt.

4. Reifen für schwere Last (2) nach einem der Ansprüche 1 bis 3, wobei
in einem Meridianquerschnitt des Reifens (2) in dem Normalzustand eine Kontur (PL) der Karkasse (12) in einem radial inneren Abschnitt von der Position maximaler Breite (PPs) der Karkasse (12) einen nach außen gewölbten gekrümmten Abschnitt (70) und einen nach innen vertieften umgekehrt gekrümmten Abschnitt (72) umfasst, der sich radial innen von dem gekrümmten Abschnitt (70) befindet,
der umgekehrt gekrümmte Abschnitt (72) mit dem gekrümmten Abschnitt (70) verbunden ist,
eine Grenze zwischen dem gekrümmten Abschnitt (70) und dem umgekehrt gekrümmten Abschnitt (72) ein Wendepunkt (PV) ist,
ein Teil oder eine Gesamtheit des gekrümmten Abschnitts (70) durch einen ersten Bogen dargestellt wird, der den Wendepunkt (PV) umfasst,
ein Teil oder eine Gesamtheit des umgekehrt gekrümmten Abschnitts (72) durch einen zweiten Bogen dargestellt wird, der den Wendepunkt (PV) umfasst,
der erste Bogen und der zweite Bogen an dem Wendepunkt (PV) tangential zueinander sind, und
sich das RFID-Tag (60) radial außen von dem Wendepunkt (PV) befindet.

5. Reifen für schwere Last (2) nach einem der Ansprüche 1 bis 4, wobei
sich ein äußeres Ende (PB) des Wulstschutzstreifens (8) radial außen von einem inneren Ende (PS) der Seitenwand (6) befindet, und
die Seitenwand (6) das äußere Ende (PB) des Wulstschutzstreifens (8) bedeckt.

6. Reifen für schwere Last (2) nach einem der Ansprüche 1 bis 5, wobei
das Tag-Element (26) ein plattenförmiges Element ist, in dem das RFID-Tag (60) mit einem vernetzten Kautschuk bedeckt ist, und
das Tag-Element (26) eine Dicke von nicht weniger als 1,0 mm und nicht mehr als 2,5 mm aufweist.

7. Reifen für schwere Last (2) nach einem der Ansprüche 1 bis 6, wobei eine Anzahl der Gürtellagen (54), die in dem Gürtel (52) enthalten sind, zwei oder weniger beträgt.

8. Reifen für schwere Last (2) nach einem der Ansprüche 1 bis 7, ferner umfassend ein Band (56), das sich radial außen von der Karkasse (12) befindet und einen schraubenförmig gewickelten Bandkord umfasst, wobei
das Band (56) ein Vollband (58) umfasst, das Enden aufweist, die einander über eine Äquatorebene (CL) gegenüberliegen, und
die Gürtellagen (54) und das Vollband (58) in der radialen Richtung ausgerichtet sind.

9. Reifen für schwere Last (2) nach einem der Ansprüche 1 bis 8, wobei
der Kernreiter (38) einen inneren Kernreiter (40), der sich radial außen von dem Kern (36) befindet, und einen äußeren Kernreiter (42) umfasst, der sich radial außen von dem inneren Kernreiter (40) befindet,
der äußere Kernreiter (42) flexibler als der innere Kernreiter (40) ist, ein komplexer Elastizitätsmodul des äußeren Kernreiters (42) nicht weniger als 3,0 MPa und nicht mehr als 6,0 MPa beträgt und ein komplexer Elastizitätsmodul des inneren Kernreiters (40) nicht weniger als 60 MPa und nicht mehr als 90 MPa beträgt,
das Tag-Element (26) mit dem äußeren Kernreiter (42) auf einer radial äußeren Seite des Endes (PF) des Umschlagabschnitts (50) in Kontakt ist, und
sich das RFID-Tag (60) zwischen einem äußeren Ende (PG2) des äußeren Kernreiters (42) und dem Ende (PF) des Umschlagabschnitts (50) in der radialen Richtung befindet.

10. Reifen für schwere Last (2) nach Anspruch 9, wobei sich das Tag-Element (26) zwischen dem äußeren Ende (PG2) des äußeren Kernreiters (42) und einem äußeren Ende (PB) des Wulstschutzstreifens (8) zwischen dem äußeren Kernreiter (42) und der Seitenwand (6) befindet.

11. Reifen für schwere Last (2) nach Anspruch 9 oder 10, wobei der äußere Kernreiter (42) im Wesentlichen die gleiche Steifigkeit wie die Seitenwand (6) aufweist oder härter als die Seitenwand (6) ist.

12. Reifen für schwere Last (2) nach einem der Ansprüche 9 bis 11, wobei der äußere Kernreiter (42) flexibler als der Wulstschutzstreifen (8) ist.

13. Reifen für schwere Last (2) nach einem der Ansprüche 9 bis 12, wobei
das Tag-Element (26) ferner einen Schutz (62) umfasst, der die Gesamtheit des RFID-Tags (60) bedeckt, und
der Schutz (62) im Wesentlichen die gleiche Steifigkeit wie der äußere Kernreiter (42) aufweist.

14. Reifen für schwere Last (2) nach einem der Ansprüche 9 bis 13, wobei der Kernreiter (38) ferner einen Randstreifen (44) umfasst, der sich axial außen von dem äußeren Kernreiter (42) befindet,
der Randstreifen (44) einen Teil einer äußeren Oberfläche des Kernreiters (38) bildet,
der Randstreifen (44) flexibler als der Wulstschutzstreifen (8) und härter als der äußere Kernreiter (42) ist, ein komplexer Elastizitätsmodul des Randstreifens (44) nicht weniger als 7,0 MPa und nicht mehr als 12 MPa beträgt,
sich der Randstreifen (44) zwischen einem äußeren Ende (PB) des Wulstschutzstreifens (8) und einem inneren Ende (PG1) des äußeren Kernreiters (42) in der radialen Richtung befindet,
das Ende des Umschlagabschnitts (50) mit dem Randstreifen (44) in Kontakt ist, und
sich das Tag-Element (26) radial außen von dem äußeren Ende des Randstreifens (44) befindet.

## Revendications

1. Pneumatique pour service intensif (2) comprenant :
une paire de talons (10) ;
une carcasse (12) s'étendant sur et entre la paire de talons (10) ;
une ceinture (52) située radialement à l'extérieur de la carcasse (12) et incluant un grand nombre de câblés de ceinture alignés les uns avec les autres ;
une paire de parois latérales (6) situées chacune axialement à l'extérieur de la carcasse (12) ;
une paire de bandelettes de talon (8) situées chacune radialement à l'intérieur de la paroi latérale (6) et configurées pour venir en contact avec une jante (R), qui est une jante normale, une jante normale étant une jante spécifiée dans une norme sur laquelle repose le pneumatique, telle que la « standard rim » (jante standard) dans la norme JATMA, la « design rim » (jante par conception) dans la norme TRA, ou la « measuring rim » (jante de mesurage) dans la norme ETRTO ; et
un élément d'étiquette (26) incluant une étiquette RFID (60), dans lequel
chacun des talons (10) inclut une âme (36) et un apex (38) situé radialement à l'extérieur de l'âme (36),
la carcasse (12) inclut une nappe de carcasse (46),
la nappe de carcasse (46) inclut un corps de nappe (48) s'étendant entre la paire de talons (10) et une paire de portions retroussées (50) connectées chacune au corps de nappe (48) et retroussées autour du talon (10),
la ceinture (52) inclut au plus trois nappes de ceinture (54) alignées dans une direction radiale,
un état où le pneumatique (2) est monté sur la jante (R) et où une pression interne du pneumatique (2) est ajustée à une pression interne normale est un état normal, et
un état où une charge égale à 50 % d'une charge normale est appliquée sur le pneumatique (2) à l'état normal et où le pneumatique (2) est amené en contact avec une surface plane (FS) est un état de contact au sol standard,
**caractérisé en ce que**, à l'état de contact au sol standard, l'étiquette RFID (60) est située entre une extrémité axialement extérieure (PRa) de la jante (R) et une position de largeur maximum (PWs) du pneumatique (2) dans une direction axiale, et est située entre une extrémité radialement extérieure (PRr) de la jante (R) et la position de largeur maximum (PWs) du pneumatique (2) dans la direction radiale,
dans lequel le pneumatique (2) comprend en outre une paire de rubans intercouches (22), et dans lequel
chaque ruban intercouche (22) est situé entre la bandelette de talon (8) et l'apex (38) dans la direction axiale, et recouvre une extrémité (PF) de la portion retroussée (50),
le ruban intercouche (22) est plus dur que la paroi latérale (6) et est plus flexible que la bandelette de talon (8), un module d'élasticité complexe du ruban intercouche (22) n'étant pas inférieur à 7,0 MPa et n'étant pas supérieur à 12 MPa, un module d'élasticité complexe de la paroi latérale (6) étant pas inférieur à 2,0 MPa et n'étant pas est supérieure à 6,0 MPa, et un module d'élasticité complexe de la bandelette de talon (8) n'étant pas inférieur à 10 MPa et n'étant pas supérieur à 15 MPa, un module d'élasticité complexe étant mesuré selon les standards de la norme industrielle japonaise JIS K6394 dans les conditions de mesurage suivantes : contrainte initiale = 10 %, contrainte dynamique = ± 1 %, fréquence = 10 Hz, mode = mode d'étirement, et température = 70 °C, et
une extrémité intérieure (26u) de l'élément d'étiquette (26) est située radialement à l'extérieur d'une extrémité extérieure du ruban intercouche (22).

2. Pneumatique pour service intensif (2) selon la revendication 1, dans lequel, à l'état de contact au sol standard, l'étiquette RFID (60) est située entre une extrémité de la portion retroussée (50) et une position de largeur maximum (PPs) de la carcasse (12) dans la direction axiale, et est située entre l'extrémité de la portion retroussée (50) et la position de largeur maximum (PPs) de la carcasse (12) dans la direction radiale.

3. Pneumatique pour service intensif (2) selon la revendication 1 ou 2, dans lequel une distance la plus courte (t) depuis une surface extérieure du pneumatique (2) jusqu'à l'étiquette RFID (60) n'est pas inférieure à 3,5 mm.

4. Pneumatique pour service intensif (2) selon l'une quelconque des revendications 1 à 3, dans lequel
dans une section transversale méridienne du pneumatique (2) à l'état normal, un contour (PL) de la carcasse (12) inclut, dans une portion radialement intérieure par rapport à la position de largeur maximum (PPs) de la carcasse (12), une portion incurvée bombée vers l'extérieur (70) et une portion inversement incurvée évidée vers l'intérieur (72) située radialement à l'intérieur de la portion incurvée (70),
la portion inversement incurvée (72) est connectée à la portion incurvée (70), une frontière entre la portion incurvée (70) et la portion inversement incurvée (72) est un point d'inflexion (PV),
une partie ou une entièreté de la portion incurvée (70) est représentée par un premier arc incluant le point d'inflexion (PV),
une partie ou une entièreté de la portion inversement incurvée (72) est représentée par un deuxième arc incluant le point d'inflexion (PV),
le premier arc et le deuxième arc sont tangents l'un à l'autre au niveau du point d'inflexion (PV), et
l'étiquette RFID (60) est située radialement à l'extérieur du point d'inflexion (PV).

5. Pneumatique pour service intensif (2) selon l'une quelconque des revendications 1 à 4, dans lequel
une extrémité extérieure (PB) de la bandelette de talon (8) est située radialement à l'extérieur d'une extrémité intérieure (PS) de la paroi latérale (6), et
la paroi latérale (6) recouvre l'extrémité extérieure (PB) de la bandelette de talon (8).

6. Pneumatique pour service intensif (2) selon l'une quelconque des revendications 1 à 5, dans lequel
l'élément d'étiquette (26) est un élément en forme de plaque dans lequel l'étiquette RFID (60) est recouverte d'un caoutchouc réticulé, et
l'élément d'étiquette (26) présente une épaisseur qui n'est pas inférieure à 1,0 mm et qui n'est pas supérieure à 2,5 mm.

7. Pneumatique pour service intensif (2) selon l'une quelconque des revendications 1 à 6, dans lequel un nombre de nappes de ceinture (54) incluses dans la ceinture (52) est d'au moins deux.

8. Pneumatique pour service intensif (2) selon l'une quelconque des revendications 1 à 7, comprenant en outre une bande (56) située radialement à l'extérieur de la carcasse (12) et incluant un câblé de bande enroulé de manière hélicoïdale, dans lequel
la bande (56) inclut une bande complète (58) ayant des extrémités opposées l'une à l'autre à travers un plan d'équateur (CL), et
les nappes de ceinture (54) et la bande complète (58) sont alignées dans la direction radiale.

9. Pneumatique pour service intensif (2) selon l'une quelconque des revendications 1 à 8, dans lequel
l'apex (38) inclut un apex intérieur (40) situé radialement à l'extérieur de l'âme (36) et un apex extérieur (42) situé radialement à l'extérieur de l'apex intérieur (40),
l'apex extérieur (42) est plus flexible que l'apex intérieur (40), un module d'élasticité complexe de l'apex extérieur (42) n'étant pas inférieur à 3,0 MPa et n'étant pas supérieur à 6,0 MPa, et un module d'élasticité complexe de l'apex intérieur (40) n'étant pas inférieur à 60 MPa et n'étant pas supérieur à 90 MPa,
l'élément d'étiquette (26) est en contact avec l'apex extérieur (42) sur un côté radialement extérieur de l'extrémité (PF) de la portion retroussée (50), et
l'étiquette RFID (60) est située entre une extrémité extérieure (PG2) de l'apex extérieur (42) et l'extrémité (PF) de la portion retroussée (50) dans la direction radiale.

10. Pneumatique pour service intensif (2) selon la revendication 9, dans lequel, entre l'extrémité extérieure (PG2) de l'apex extérieur (42) et une extrémité extérieure (PB) de la bandelette de talon (8), l'élément d'étiquette (26) est situé entre l'apex extérieur (42) et la paroi latérale (6).

11. Pneumatique pour service intensif (2) selon la revendication 9 ou 10, dans lequel l'apex extérieur (42) présente une raideur sensiblement égale à celle de la paroi latérale (6), ou est plus dur que la paroi latérale (6).

12. Pneumatique pour service intensif (2) selon l'une quelconque des revendications 9 à 11, dans lequel l'apex extérieur (42) est plus flexible que la bandelette de talon (8).

13. Pneumatique pour service intensif (2) selon l'une quelconque des revendications 9 à 12, dans lequel
l'élément d'étiquette (26) inclut en outre un protecteur (62) recouvrant l'entièreté de l'étiquette RFID (60), et
le protecteur (62) présente une raideur sensiblement égale à celle de l'apex extérieur (42).

14. Pneumatique pour service intensif (2) selon l'une quelconque des revendications 9 à 13, dans lequel l'apex (38) inclut en outre un ruban de bord (44) situé axialement à l'extérieur de l'apex extérieur (42),
le ruban de bord (44) fait partie d'une surface extérieure de l'apex (68),
le ruban de bord (44) est plus flexible que la bandelette de talon (8) et est plus dur que l'apex extérieur (42), un module d'élasticité complexe du ruban de bord (44) n'étant pas inférieur à 7,0 MPa et n'étant pas supérieur à 12 MPa,
le ruban de bord (44) est situé entre une extrémité extérieure (PB) de la bandelette de talon (8) et une extrémité intérieure (PG1) de l'apex extérieur (42) dans la direction radiale,
l'extrémité de la portion retroussée (50) est en contact avec le ruban de bord (44), et
l'élément d'étiquette (26) est situé radialement à l'extérieur de l'extrémité extérieure du ruban de bord (44).
